# EUROPEAN PATENT APPLICATION

(11) **EP 4 759 395 A1**
(43) Date of publication of application: **17.06.2026**
(21) Application number: 24859853.4
(22) Date of filing: 28.08.2024
(51) Int. Cl.: B01D 21/01, C08L 27/12, C08L 29/10, C08L 101/02

(54) **METHOD FOR RECOVERING WATER-SOLUBLE FLUORINE-CONTAINING POLYMER**

(30) Priority: 28.08.2023 JP 2023138097
(71) Applicant: Daikin Industries, Ltd., Osaka-shi, Osaka 530-0001 (JP)
(72) Inventor: OHASHI, Mihoko, Osaka-Shi, Osaka 530-0001 (JP); IRIE, Masaki, Osaka-Shi, Osaka 530-0001 (JP); ISHIHARA, Sumi, Osaka-Shi, Osaka 530-0001 (JP)
(74) Representative: Hoffmann Eitle
(86) International application number: PCT/JP2024/030793
(87) International publication number: WO 2025/047823

(57) **Abstract**

Provided is a method for recovering a water-soluble fluorine-containing polymer, including mixing a composition containing the water-soluble fluorine-containing polymer having a number-average molecular weight of more than 0.1 x 10⁴ and water with a cationic polymer, to thereby recover the water-soluble fluorine-containing polymer from the composition.

## Description

### TECHNICAL FIELD

The present disclosure relates to a method for recovering a water-soluble fluorine-containing polymer.

### BACKGROUND ART

Patent Document 1 describes a method for reducing the amount of a fluorine compound in a water phase, comprising:
a) a step of adding one or more polycationic polymers or precursor polymers thereof to the water phase to at least partially precipitate the fluorine compound; and
b) a step of adding one or more polyanionic polymers to the water phase.

Patent Document 2 describes a method for treating water, comprising a removal step of removing, from water containing a polymer (I) including a polymerized unit (I) based on a monomer represented by the following general formula (I), the polymer (I).

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

### RELATED ART

### PATENT DOCUMENTS

Patent Document 1: Japanese Patent Application Laid-Open No. 2011-519976
Patent Document 2: International Publication No. WO2020/218621

### SUMMARY OF THE INVENTION

### PROBLEM TO BE SOLVED BY THE INVENTION

An object of the present disclosure is to provide a method for recovering a water-soluble fluorine-containing polymer at a high recovery rate.

### MEANS FOR SOLVING THE PROBLEM

According to the present disclosure, there is provided a method for recovering a water-soluble fluorine-containing polymer, comprising mixing a composition containing the water-soluble fluorine-containing polymer having a number-average molecular weight of more than 0.1 × 10⁴ and water with a cationic polymer, to thereby recover the water-soluble fluorine-containing polymer from the composition.

### EFFECTS OF INVENTION

According to the present disclosure, a method for recovering a water-soluble fluorine-containing polymer at a high recovery rate can be provided.

### DESCRIPTION OF EMBODIMENTS

In the present disclosure, the term "organic group" means a group containing one or more carbon atoms or a group formed by removing one hydrogen atom from an organic compound. The organic group described above is preferably an alkyl group optionally having one or more substituents.

In the present disclosure, a range represented by endpoints includes all numerical values that fall within that range (for example, 1 to 10 includes 1.4, 1.9, 2.33, 5.75, 9.98, and the like).

In the present disclosure, the phrase "at least one" includes all numerical values greater than or equal to 1 (such as at least 2, at least 4, at least 6, at least 8, at least 10, at least 25, at least 50, at least 100, and the like).

Below, specific embodiments of the present disclosure will now be described in detail, but the present disclosure is not limited to the following embodiments.

It has been found that when a method for using a cationic polymer is selected as a method for recovering a water-soluble fluorine-containing polymer from a composition containing the water-soluble fluorine-containing polymer having a number-average molecular weight of more than 0.1 × 10⁴ and water, the water-soluble fluorine-containing polymer can be recovered at a very high recovery rate. Patent Document 2 proposes a method for treating water, but does not specifically examine a method using a cationic polymer.

That is, in the method for recovering of the present disclosure, the composition containing a water-soluble fluorine-containing polymer having a number-average molecular weight of more than 0.1 × 10⁴ and water is mixed with a cationic polymer, to thereby recover the water-soluble fluorine-containing polymer from the composition. Since using this method enables generating an agglomerate containing the water-soluble fluorine-containing polymer and the cationic polymer, separation of water and the agglomerate makes it possible to recover the water-soluble fluorine-containing polymer as agglomerate and further to also recover water with high purity.

### (Cationic Polymer)

The method for recovering of the present disclosure uses a cationic polymer. Examples of the cationic polymer include a polyaminoalkyl methacrylate such as dimethylaminoethyl methacrylate, polyethyleneimine, halogenated polydiallylammonium, chitosan, a urea-formalin resin, and the like.

Examples of commercially available cationic polymers include TAKIFLOC C-403, C-408, C-805, C-806, and C-809 manufactured by TAKI CHEMICAL CO., LTD.; ARONFLOC EC-509L, C-508, CX-400, C-303, and CX-333 manufactured by MT Aquapolymer, Inc.; EPOMIN SP-200, HM-2000, P-1000, and P-3000 manufactured by Nippon Shokubai Co., Ltd.; Zeta Ace C-301, C-350, C-932, and P-702 manufactured by Kurita Water Industries Ltd.; Unisense FPA100L, KHE104L, KHF11L, and KHP10P manufactured by SENKA Corporation, and the like.

Among the cationic polymers, which can recover the water-soluble fluorine-containing polymer at a higher recovery rate, preferred is at least one selected from the group consisting of polyethyleneimine, poly(diallyldimethylammonium) and its salt, poly(trimethylaminoethyl methacrylate) and its salt, poly(dimethylaminoethyl methacrylate), a dimethylamine-epichlorohydrin condensate, a dicyandiamide-formalin condensate, and a dicyandiamide-diethylenetriamine condensate, and more preferred is polyethyleneimine.

### (Mixing Step)

In the method for recovering of the present disclosure, a composition containing a water-soluble fluorine-containing polymer and water is mixed with a cationic polymer. The composition and the water-soluble fluorine-containing polymer will be described later.

The content of the water-soluble fluorine-containing polymer in the composition is preferably more than 0% by mass and 1.0% by mass or less, based on the mass of the composition. The content of the water-soluble fluorine-containing polymer in the composition is more preferably more than 0.003% by mass, 0.005% by mass or more, 0.010% by mass or more, 0.020% by mass or more, or 0.030% by mass or more, based on the mass of the composition. The content of the water-soluble fluorine-containing polymer in the composition is 0.5% by mass or less or 0.2% by mass or less, based on the mass of the composition.

The content of the water-soluble fluorine-containing polymer in the composition is determined by liquid chromatography or NMR measurement. In a case in which the water-soluble fluorine-containing polymer contains a carbonyl group, it can also be determined by a Fourier transform infrared spectrometer.

Also, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like disclose measurement methods for their respective polymers. The method for measuring the content of the water-soluble fluorine-containing polymer can be the methods for measuring each of the polymers described therein.

The content of the water-soluble fluorine-containing polymer in the composition can be quantified by a nuclear magnetic resonance apparatus (NMR), liquid chromatography (LC), a Fourier transform infrared spectroscopic apparatus (FT-IR), or the like. When the content of the water-soluble fluorine-containing polymer in the composition is a low concentration of less than 0.1% by mass, it is preferably quantified by LC.

A detector for LC is preferably an ultraviolet absorbance detector (UV), a photodiode array detector (PDA), a parallax refractive index detector (RI), an evaporative light scattering detector (ELSD), a charged aerosol detector (CAD), a mass detector (MS), or the like, more preferably an ELSD, a CAD, or an MS, still more preferably a CAD or an MS, and most preferably an MS.

A separation mode of the column used for quantification is preferably reversed phase chromatography, normal phase chromatography, ion exchange chromatography, size exclusion chromatography, or the like and more preferably reversed phase chromatography or size exclusion chromatography.

A mobile phase is preferably water or a mixed solvent of water and a water-soluble organic solvent, and a buffer or an ion pair reagent may be added to water to be used. The organic solvent is preferably acetonitrile or methanol.

In a case in which the water-soluble fluorine-containing polymer is adsorbed to a metal material of a LC flow path, so that its quantitative performance and sensitivity are reduced, the ion pair reagent for use improves the quantitative performance and sensitivity. The ion pair reagent is preferably triethylamine (TEA), N,N-diisopropylethylamine (DIPEA), and the like, and an acidic buffer for adjusting a pH of the mobile phase is preferably hexafluoro-2-propanol.

The amount of the cationic polymer used in the method for recovering of the present disclosure is preferably 1 to 10,000% by mass based on the mass of the water-soluble fluorine-containing polymer, more preferably 10% by mass or more, still more preferably 30% by mass or more, and more preferably 1,000% by mass or less and still more preferably 500% by mass or less.

The composition and the cationic polymer can be mixed, for example, by adding the cationic polymer to the composition. The number of additions of the cationic polymer may be once or a plurality of times.

A pH of the composition to be mixed with the cationic polymer is preferably 4.0 or more, more preferably 5.0 or more, still more preferably 6.0 or more, and preferably 11.0 or less, more preferably 9.0 or less, and still more preferably 8.0 or less.

The pH of the composition can be measured with a pH meter (for example, a pH meter D-20 manufactured by HORIBA, Ltd.).

The pH of the composition may be adjusted before mixing the composition with the cationic polymer. The pH can be adjusted by mixing the composition with a pH adjuster. The pH adjuster is not limited, and for example, an acid compound or an alkali compound can be used. The acid compound can be hydrochloric acid (HCl), nitric acid (HNO₃), sulfuric acid (H₂SO₄), phosphoric acid (H₃PO₄), etc., and is preferably hydrochloric acid (HCl) or nitric acid (HNO₃). Examples of the alkaline compound include, for example, hydroxides of alkali metals such as NaOH and KOH; hydroxides of alkaline earth metals such as Mg(OH)₂ and Ca(OH)₂; a salt with buffering action such as disodium hydrogen phosphate; ammonia; and amines.

A temperature at which the composition and the cationic polymer are mixed is preferably 0°C or higher, more preferably 5°C or higher and still more preferably 10°C or higher, and preferably 50°C or lower, more preferably 40°C or lower, and still more preferably 30°C or lower.

The composition and the cationic polymer can be mixed by stirring a mixture containing the composition and the cationic polymer. A stirring time is, for example, 30 seconds to 100 hours.

In the method for recovering of the present disclosure, an inorganic flocculant may be mixed with the composition. The composition and the inorganic flocculant may be mixed simultaneously when the composition and the cationic polymer are mixed, they may be mixed before the composition and the cationic polymer are mixed, or after the composition and the cationic polymer were mixed.

The composition and the inorganic flocculant can be mixed, for example, by adding the inorganic flocculant to the composition. The number of additions of inorganic flocculant may be once or a plurality of times. Also, the inorganic flocculant and the cationic polymer may be added alternately.

Examples of the inorganic flocculant include a metal salt and the like, and a commercially available product may be used. Seawater containing Mg²⁺, Ca²⁺, and the like, and a low molecular weight cationic polymer flocculant may also be used.

The inorganic flocculant is preferably a metal salt, more preferably a salt of a divalent to hexavalent metal, and still more preferably a salt of a trivalent to hexavalent metal. A metal element constituting the metal salt is preferably at least one selected from the group consisting of Fe, Al, and Ca, more preferably at least one selected from the group consisting of Fe and Al, and still more preferably Al. A counter ion of the metal element constituting the metal salt is preferably at least one selected from the group consisting of a sulfate ion, a hydroxide ion, a fluoride ion, a nitrate ion and a chloride ion, more preferably at least one selected from the group consisting of a sulfate ion and a chloride ion, and still more preferably a sulfate ion.

The inorganic flocculant is preferably at least one selected from the group consisting of an iron salt and an aluminum salt, more preferably at least one selected from the group consisting of ferric chloride, aluminum sulfate, and polyaluminum chloride, still more preferably at least one selected from the group consisting of aluminum sulfate and polyaluminum chloride, and even still more preferably aluminum sulfate.

The amount of the inorganic flocculant used in the method for recovering of the present disclosure is preferably 0.1 to 1,000% by mass, more preferably 1.0% by mass or more, still more preferably 10% by mass or more, even still more preferably 30% by mass or more, and more preferably 300% by mass or less and still more preferably 100% by mass or less, based on the mass of the water-soluble fluorine-containing polymer.

In the method for recovering of the present disclosure, in addition to the cationic polymer, at least one selected from the group consisting of an anionic polymer, a nonionic polymer, and an amphoteric polymer may be mixed with the composition. Using these polymers in addition to the cationic polymer allows agglomerate containing the water-soluble fluorine-containing polymer to be generated more smoothly, making it possible to recover the water-soluble fluorine-containing polymer at a higher recovery rate.

Mixing of the composition with at least one selected from the group consisting of the anionic polymer, nonionic polymer, and amphoteric polymer may be carried out simultaneously when mixing the composition with the cationic polymer and may be carried out before mixing the composition with the cationic polymer, or after mixing the composition with the cationic polymer. Among these, it is preferable that the composition is mixed with the cationic polymer and then at least one selected from the group consisting of the anionic polymers, nonionic polymers, and amphoteric polymers is mixed with the composition.

The weight-average molecular weights of the anionic polymer, nonionic polymer, and amphoteric polymer are preferably 100,000 or more, more preferably 500,000 or more, and still more preferably 1,000,000 or more.

The mixing of the composition with at least one selected from the group consisting of the anionic polymer, nonionic polymer, and amphoteric polymer can be carried out, for example, by adding at least one of these polymers to the composition. The number of additions of at least one of these polymers may be once or a plurality of times. Also at least one selected from the group consisting of the nonionic polymer and amphoteric polymer may be alternately added with the cationic polymer.

Examples of the anionic polymer include sodium polyacrylate, polyacrylamide-based polymer flocculants such as a partial hydrolyzate of polyacrylamide, partially sulfomethylated polyacrylamide, and poly(2-acrylamide)-2-methylpropane sulfate.

Examples of commercially available anionic polymers include Floclan A1210 manufactured by Katayama Nalco Inc.; TAKIFLOC A-102, A-103, A-177T, A-108T, A-142, and A-50 manufactured by TAKI CHEMICAL CO., LTD.; ACOFLOC A-95, A-110, and A-150 manufactured by MT Aquapolymer, Inc.; SUMIFLOC FA-40 and FA-50 manufactured by MT Aquapolymer Co., Ltd.; DIAFLOC AP199, Ap120C, Ap784, and DF732B manufactured by Mitsubishi Chemical Corporation; and WATERFLOC LA-912M, A-52M, and A-71 manufactured by Technica Goudou Co., Ltd.

The amount of the anionic polymer used in the method for recovering of the present disclosure is preferably 0.001 to 50% by mass, more preferably 0.004% by mass or more, still more preferably 0.010% by mass or more, and more preferably 30% by mass or less and still more preferably 20% by mass or less, based on the mass of the water-soluble fluorine-containing polymer.

Examples of the nonionic polymer include polyacrylamide-based and polyethylene oxide-based polymer flocculants.

Examples of commercially available nonionic polymers include ACOFLOC N-100, N-102, and N-104 manufactured by MT Aquapolymer, Inc.; Orfloc ON-1H, ON-2, ON-3, and N-1 manufactured by ORGANO CORPORATION, and WATERFLOC L N-52B manufactured by Technica Goudou Co., Ltd.

The amount of the nonionic polymer used in the method for recovering of the present disclosure is preferably 0.001 to 50% by mass, more preferably 0.004% by mass or more, still more preferably 0.010% by mass or more, and more preferably 30% by mass or less, and still more preferably 20% by mass or less, based on the mass of the water-soluble fluorine-containing polymer.

As the amphoteric polymer, a polymer commercially available as an amphoteric polymer flocculant can be used. Examples of the amphoteric polymer include a copolymer of acrylamide, aminoalkyl methacrylate, and sodium acrylate.

Examples of commercially available amphoteric polymers include TAKIFLOC MC-601, MC-602, and MC-603 manufactured by TAKI CHEMICAL CO., LTD.; DIAFLOC KA003 and KA606A manufactured by Mitsubishi Chemical Corporation.

The amount of the amphoteric polymer used in the method for recovering of the present disclosure is preferably 0.001 to 50% by mass, more preferably 0.004% by mass or more, and still more preferably 0.010% by mass or more, and more preferably 30% by mass or less and still more preferably 20% by mass or less, based on the mass of the water-soluble fluorine-containing polymer.

In one embodiment of the method for recovering of the present disclosure,
a composition containing a water-soluble fluorine-containing polymer and water is mixed with an inorganic flocculant,
a composition containing the water-soluble fluorine-containing polymer, water and the inorganic flocculant is mixed with a cationic polymer,
a composition containing the water-soluble fluorine-containing polymer, water, the inorganic flocculant and the cationic polymer is mixed with at least one selected from the group consisting of an anionic polymer, a nonionic polymer and an amphoteric polymer,
agglomerate containing the water-soluble fluorine-containing polymer, inorganic flocculant, cationic polymer, and at least one selected from the group consisting of the anionic polymer, the nonionic polymer and the amphoteric polymer is generated, and
the water and the agglomerate are separated,
so that the water-soluble fluorine-containing polymer can be recovered as agglomerate.

In the above embodiment, the agglomerate generated in each step may be appropriately separated from water and recovered. In the above embodiment, a pH of the composition may be appropriately adjusted in each step. Also, each step may be carried out in a batch manner or a continuous manner.

In the method for recovering of the present disclosure, the composition and the cationic polymer are mixed, agglomerate containing the water-soluble fluorine-containing polymer and the cationic polymer is generated, and water and the agglomerate are separated, so that the water-soluble fluorine-containing polymer can be recovered as agglomerate.

The separation of water and the agglomerate can be performed by known methods such as a method for filtering a mixture containing water and the agglomerate, a method for applying centrifugal force to a mixture containing water and the agglomerate, or a method for allowing a mixture containing water and the agglomerate to stand followed by precipitation of the agglomerate.

Using the method for recovering of the present disclosure enables recovering 95.0% by mass or more of the water-soluble fluorine-containing polymer contained in the composition. The recovery rate of the water-soluble fluorine-containing polymer is preferably 99.0% by mass or more and more preferably 99.5% by mass or more.

Also, using the method for recovering of the present disclosure makes it possible to recover high-purity water. The content of the water-soluble fluorine-containing polymer contained in the water to be recovered is 30 ppm by mass or less, more preferably 10 ppm by mass or less, and still more preferably less than 1 ppm by mass, based on the water. The content of the water-soluble fluorine-containing polymer contained in the water is determined by the same measurement method as the content of the water-soluble fluorine-containing polymer in the composition.

### (Composition Containing Water-Soluble Fluorine-Containing Polymer and Water)

The composition to be subjected to the method for recovering of the present disclosure contains the water-soluble fluorine-containing polymer and water. The composition to be subjected to the method for recovering of the present disclosure is usually an aqueous solution in which the water-soluble fluorine-containing polymer is dissolved in water, but it may also be a dispersion in which the components are partially dispersed in water.

The composition to be subjected to the method for recovering of the present disclosure may contain a further component in addition to the water-soluble fluorine-containing polymer and water. Examples of the further component include a water-insoluble fluorine-containing polymer; a fluorine-free polymer; a compound having a molecular weight of 1,000 or less; and the like.

Examples of the compound having a molecular weight of 1,000 or less include fluorine compounds such as a fluorine-containing surfactant and a fluorine-containing monomer, a hydrocarbon-based surfactant, an organic solvent, a monomer, a polymerization initiator, a chain transfer agent, and a coagulant.

The content of the further component is preferably 1.0% by mass or less, more preferably 0.5% by mass or less, and still more preferably 0.2% by mass or less, and the lower limit is not limited, which may be 0% by mass based on the composition.

The composition to be subjected to the method for recovering of the present disclosure may contain a further polymer in addition to the water-soluble fluorine-containing polymer. The further polymer may be water-soluble or water-insoluble, and typically have no ionic groups or a limited number of ionic groups resulting in an ion exchange rate higher than approximately 100. The ion exchange rate of the further polymer is preferably more than 53, more preferably 100 or more, still more preferably 1,000 or more, even still more preferably 2,000 or more, and particularly preferably 5,000 or more.

Examples of the further polymer include a fluororesin and fluoroelastomer.

Examples of the fluororesin include polytetrafluoroethylene (PTFE); copolymers of tetrafluoroethylene (TFE) and another monomer copolymerizable with TFE (fluorine-containing monomers such as vinylidene fluoride, hexafluoropropylene, chlorotrifluoroethylene, and perfluoro (alkyl vinyl ether), hydrocarbon olefins such as ethylene, propylene, and isobutene, an alkyl vinyl ether, and the like) (e.g., tetrafluoroethylene-hexafluoropropylene copolymer (FEP), tetrafluoroethylene-perfluoro (alkyl vinyl ether) copolymer (PFA), and ethylene-tetrafluoroethylene copolymer (ETFE)); polyvinylidene fluoride (PVDF), polychlorotrifluoroethylene (PCTFE), and ethylene-chlorotrifluoroethylene (ECTFE).

Examples of the fluoroelastomer include a vinylidene fluoride-based elastomer such as a vinylidene fluoride-hexafluoropropylene copolymer, and perfluoroelastomers such as tetrafluoroethylene-propylene rubber and tetrafluoroethylene-perfluoromethylvinyl ether elastomer.

The composition to be subjected to the method for recovering of the present disclosure may be, for example, waste water generated in industrial production. That is, the composition to be subjected to the method for recovering of the present disclosure may be waste water. The composition to be subjected to the method for recovering of the present disclosure may be a composition generated in a polymer production step. The composition to be subjected to the method for recovering of the present disclosure may be a composition derived from raw materials used in a polymerization step. The polymerization step may be a step of polymerizing a monomer in the presence of the water-soluble fluorine-containing polymer and water.

The composition generated in the polymer production step may include, in addition to the composition generated in the polymerization step of polymerizing one or more monomers, a composition generated in a pretreatment step before the polymerization step (e.g., a step of preparing an emulsifier at a predetermined concentration or the like) as well as a composition generated in a posttreatment step after the polymerization step (e.g., a concentration step of an aqueous dispersion, a solid-liquid separation step, a coagulation step, a washing step, a dehydration step, a drying step, a heat treatment step, etc.). The composition generated in the polymerization step may also include an aqueous solution, a dispersion, and liquid obtained by liquefying gas. Furthermore, the composition generated in the polymerization step includes not only a composition produced directly in the polymerization step, but also a composition obtained by treating the composition produced directly in the polymerization step by methods such as filtration, distillation, concentration, and dilution.

Examples of the monomer include, for example, tetrafluoroethylene (TFE), hexafluoropropylene (HFP), chlorotrifluoroethylene (CTFE), vinyl fluoride, vinylidene fluoride (VDF), trifluoroethylene, a fluoroalkyl vinyl ether, a fluoroalkyl ethylene, a fluoroalkyl allyl ether, trifluoropropylene, pentafluoropropylene, trifluorobutene, tetrafluoroisobutene, hexafluoroisobutene, a fluoromonomer represented by the general formula (100): CHX¹⁰¹=CX¹⁰²Rf¹⁰¹ (wherein one of X¹⁰¹ and X¹⁰² is H and the other is F, and Rf¹⁰¹ is a linear or branched fluoroalkyl group having 1 to 12 carbon atoms), a fluorinated vinyl heterocyclic compound, and a monomer that provides a crosslinking site.

Examples of the fluoroalkyl vinyl ether include, for example,
a fluoromonomer represented by the general formula (110): CF₂=CF-ORf¹¹¹
   wherein Rf¹¹¹ represents a perfluoro organic group;
a fluoromonomer represented by the general formula (120): CF₂=CF-OCH₂-Rf¹²¹
   wherein Rf¹²¹ is a perfluoroalkyl group having 1 to 5 carbon atoms;
a fluoromonomer represented by the general formula (130) : CF₂=CFOCF₂ORf¹³¹
   wherein Rf¹³¹ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140) : CF₂=CFO(CF₂CF(Y¹⁴¹)O)ₘ(CF₂)ₙF
   wherein Y¹⁴¹ represents a fluorine atom or a trifluoromethyl group; m is an integer of 1 to 4; and n is an integer of 1 to 4; and
a fluoromonomer represented by the general formula (150) : CF₂=CF-O-(CF₂CFY¹⁵¹-O)ₙ-(CFY¹⁵²)ₘ-A¹⁵¹
   wherein Y¹⁵¹ represents a fluorine atom, a chlorine atom, a - SO₂F group, or a perfluoroalkyl group; the perfluoroalkyl group optionally containing ether oxygen and a -SO₂F group; n represents an integer of 0 to 3; n Y¹⁵¹s are the same as or different from each other; Y¹⁵² represents a fluorine atom, a chlorine atom, or a -SO₂F group; m represents an integer of 1 to 5; m Y¹⁵²s are the same as or different from each other; A¹⁵¹ represents -SO₂X¹⁵¹, -COZ¹⁵¹, or - POZ¹⁵²Z¹⁵³; X¹⁵¹ represents F, Cl, Br, I, -OR¹⁵¹, or -NR¹⁵²R¹⁵³; Z¹⁵¹, Z¹⁵², and Z¹⁵³ are the same as or different from each other, and each represents -NR¹⁵⁴R¹⁵⁵ or -OR¹⁵⁶; R¹⁵¹, R¹⁵², R¹⁵³, R¹⁵⁴, R¹⁵⁵, and R¹⁵⁶ are the same as or different from each other, and each represents H, ammonium, an alkali metal, or an alkyl group, aryl group, or sulfonyl-containing group optionally containing a fluorine atom; and the like.

### (Water-Soluble Fluorine-Containing Polymer)

In the method for recovering of the present disclosure, a water-soluble fluorine-containing polymer is recovered from a composition containing a water-soluble fluorine-containing polymer having a number-average molecular weight of more than 0.1 × 10⁴ and water. In the method for recovering of the present disclosure, an object is to recover a water-soluble fluorine-containing polymer having a relatively high molecular weight. It has now been found that a water-soluble fluorine-containing polymer having a too low number-average molecular weight cannot be recovered at a high recovery rate even when employing the method for recovering of the present disclosure. One of the characteristics of the method for recovering of the present disclosure is use of cationic polymer for the purpose of recovering the water-soluble fluorine-containing polymer having a relatively high molecular weight.

Water-solubility means the property of being readily dissolved or dispersed in an aqueous medium. A fluorine-containing polymer with water-solubility has a particle size that cannot be measured by dynamic light scattering (DLS), or a particle size of 10 nm or less.

As the water-soluble fluorine-containing polymer, a water-soluble fluorine-containing polymer in which the proportion of hydrogen atoms bonded to carbon atoms replaced with fluorine atoms is 50% or more can be used. The "proportion of hydrogen atoms bonded to carbon atoms replaced with fluorine atoms" is calculated as a proportion of the number of fluorine atoms to the total number of hydrogen atoms bonded to carbon atoms and halogen atoms (including fluorine atoms) bonded to carbon atoms.

The number-average molecular weight of the water-soluble fluorine-containing polymer is more than 0.1 × 10⁴. The number-average molecular weight of the water-soluble fluorine-containing polymer is preferably 0.2 × 10⁴ or more, 0.3 × 10⁴ or more, 0.4 × 10⁴ or more, 0.5 × 10⁴ or more, 1.0 × 10⁴ or more, 3.0 × 10⁴ or more, or 3.1 × 10⁴ or more because the water-soluble fluorine-containing polymer can be recovered at a higher recovery rate. Also, the number-average molecular weight of the water-soluble fluorine-containing polymer is preferably 75.0 × 10⁴ or less, 50.0 × 10⁴ or less, 40.0 × 10⁴ or less, 30.0 × 10⁴ or less, or 20.0 × 10⁴ or less.

The weight-average molecular weight of the water-soluble fluorine-containing polymer is preferably 0.2 × 10⁴ or more, 0.4 × 10⁴ or more, 0.6 × 10⁴ or more, 0.8 × 10⁴ or more, 1.0 × 10⁴ or more, 2.0 × 10⁴ or more, 5.0 × 10⁴ or more, 10.0 × 10⁴ or more, 15.0 × 10⁴ or more, 20.0 × 10⁴ or more, or 25.0 × 10⁴ or more. The weight-average molecular weight of the water-soluble fluorine-containing polymer is also preferably 150.0 × 10⁴ or less, 100.0 × 10⁴ or less, 60.0 × 10⁴ or less, 50.0 × 10⁴ or less, or 40.0 × 10⁴ or less.

The number-average molecular weight and weight-average molecular weight of the water-soluble fluorine-containing polymer are those calculated by gel permeation chromatography (GPC) using monodisperse polystyrenes as standards. When measurement by GPC cannot be made, the number-average molecular weight of the water-soluble fluorine-containing polymer can be obtained from correlation between the number-average molecular weight calculated from the number of terminal groups obtained by NMR, FT-IR, etc. and a melt flow rate. The melt flow rate can be measured in accordance with JIS K 7210.

The water-soluble fluorine-containing polymer preferably has an ionic group. The ionic group of the water-soluble fluorine-containing polymer is preferably an anionic group, and preferably the same as an anionic group (A⁰) to be described later.

The water-soluble fluorine-containing polymer preferably has an ion exchange rate (IXR) of 53 or less. The IXR is defined as the number of carbon atoms in a polymer backbone relative to the ionic group. Precursor groups that become ionic by hydrolysis (for example, -SO₂F) are not considered to be ionic groups, for the purpose of determining the IXR.

The IXR of the water-soluble fluorine-containing polymer is preferably 0.5 or more, 1 or more, 3 or more, 4 or more, 5 or more, or 8 or more. The IXR of the water-soluble fluorine-containing polymer is also preferably 43 or less, 33 or less, or 23 or less.

An ion exchange capacity of the water-soluble fluorine-containing polymer is preferably 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.50 meq/g or more. The ion exchange capacity is the content of ionic groups (anionic groups) in the water-soluble fluorine-containing polymer, and is calculated from a composition of the water-soluble fluorine-containing polymer.

In water-soluble fluorine-containing polymer, the ionic (anionic) groups are typically distributed along the polymer backbone. The water-soluble fluorine-containing polymer includes a polymer backbone with a repeating side chain bonded to this backbone, and this side chain preferably has an ionic group.

The water-soluble fluorine-containing polymer preferably contains an ionic group having a pKa of less than 10 and more preferably less than 7. The ionic group of the water-soluble fluorine-containing polymer is preferably selected from the group consisting of a sulfonate, a carboxylate, a phosphonate, and a phosphate.

The term "sulfonate, carboxylate, phosphonate, and phosphate" is intended to refer to the respective salts or the respective acids that can form the salts. When a salt is used, the salt is preferably an alkali metal salt or an ammonium salt. The preferred ionic group is a sulfonate group.

The water-soluble fluorine-containing polymer is preferably a polymer (I) containing a polymerized unit (I) based on a monomer (I) represented by the general formula (I):

(I): CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

In the present disclosure, the anionic group includes a functional group that imparts an anionic group, e.g., an acid group such as -COOH and an acid salt group such as -COONH₄, in addition to anionic groups such as a sulfate group and a carboxylate group. The anionic group is preferably a sulfate group, a carboxylate group, a phosphate group, a phosphonate group, a sulfonate group, or -C(CF₃)₂OM (wherein M is -H, a metal atom, -NR⁷₄, imidazolium optionally having a substituent, pyridinium optionally having a substituent, or phosphonium optionally having a substituent, and R⁷ is H or an organic group).

R is a linking group. The "linking group" as used herein is a (m+1)-valent linking group, and refers to a divalent group when m is 1. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas, and carbamates. The linking group may be free from carbon atoms and may be a catenary heteroatom such as oxygen, sulfur, or nitrogen.

m is an integer of 1 or more, and is preferably 1 or 2 and more preferably 1. When m is an integer of 2 or more, Z¹, Z², and A⁰ may be the same or different.

Next, a suitable configuration wherein m is 1 in the general formula (I) will now be described.

R is preferably a catenary heteroatom such as oxygen, sulfur, or nitrogen, or a divalent organic group.

When R is a divalent organic group, a hydrogen atom bonded to a carbon atom may be replaced with a halogen other than fluorine, such as chlorine, and a double bond may be or may not be contained. R may be linear or branched, and may be cyclic or acyclic. R may also contain a functional group (e.g., ester, ether, ketone (a keto group), amine, halide, etc.).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond or a keto group, wherein some or all of the hydrogen atoms bonded to carbon atoms in the hydrocarbon group may be replaced with fluorine.

R is preferably at least one selected from -(CH₂)ₐ-, - (CF₂)ₐ-, -(CF₂)ₐ-O-, -O-(CF₂)ₐ-, -(CF₂)ₐ-O-(CF₂)_{b}-, -O(CF₂)ₐ-O-(CF₂)_{b}-, -(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-, -O[(CF₂)ₐ-O]_{b}-[(CF₂)-O]_{d}-, -O-[CF₂CF(CF₃)O]ₐ-(CF₂)_{b}-, -O-(CF₂)ₐ-O-[CF(CF₃)CF₂O]_{b}-O-, -O-[CF₂CF(CF₃)O]ₐ-(CF₂)_{b}-O-, -O-[CF₂CF(CF₃)O]ₐ-(CF₂)_{b}-O-[CF (CF₃)CF₂O]_{c}-O-, -[CF₂CF(CF₃)O]ₐ-, -[CF(CF₃)CF₂O]ₐ-, -(CF₂)ₐ-O-[CF(CF₃)CF₂O]ₐ-, -(CF₂)ₐ-O-[CF(CF₃)CF₂O]ₐ-(CF₂)_{b}-, -[CF₂CF(CF₃)]ₐ-CO-(CF₂)_{b}-, or combinations thereof.

In the formulas, a, b, c, and d are independently at least 1 or more. a, b, c, and d may independently be 2 or more, 3 or more, 4 or more, 10 or more, or 20 or more. The upper limits of a, b, c, and d are, for example, 100.

R is preferably at least one selected from -O-CF₂-, -O-CF₂CF₂-, -O-CF₂CF₂-O-, -O-CF₂CF₂CF₂-, -O-CF₂CF₂CF₂-O-, -O-CF₂CF(CF₃)-O-, -O-CF₂CF₂-O-CF(CF₃)CF₂-O-, -O-CF₂CF(CF₃)-O-CF₂CF₂-O-, and -O-CF₂CF(CF₃)-O-CF₂-.

R is preferably a divalent group represented by the general formula (r1):

-CF₂-O-(CX⁶₂)ₑ-{O-CF(CF₃)}_{f}-(O)_{g}- (r1)

wherein X⁶ is each independently H, F, or CF₃; e is an integer of 0 to 3; f is an integer of 0 to 3; and g is 0 or 1), and more preferably a divalent group represented by the general formula (r2):

-CF₂-O-(CX⁷₂)ₑ-(O)_{g}- (r2)

wherein X⁷ is each independently H, F, or CF₃; e is an integer of 0 to 3; and g is 0 or 1.

Preferred examples of R include -CF₂-O-, -CF₂-O-CF₂-, - CF₂-O-CH₂-, -CF₂-O-CH₂CF₂-, -O-CF₂-, -O-CF₂CF₂-, -O-CF₂CF₂CF₂-, - O-CF₂CF₂CF₂CF₂-, -O-CF₂CF(CF₃)-O-CF₂-, -O-CF₂CF(CF₃)-O-CF₂CF₂-, - CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CF₂-O-CF₂-, -CF₂-O-CF(CF₃)CH₂-, and the like. Among them, R is preferably a perfluoroalkylene group that may contain an oxygen atom, and it is specifically preferably -CF₂-O-, -CF₂-O-CF₂-, -O-CF₂-, -O-CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF(CF₃)-, -CF₂-O-CF(CF₃)CF₂-, or - CF₂-O-CF(CF₃)CF₂-O-.

-R-CZ¹Z²- in the general formula (I) is preferably represented by the general formula (s1):

-CF₂-O-(CX⁶₂)ₑ-{O-CF(CF₃)}_{f}-(O)_{g}-CZ¹Z²- (s1)

(wherein X⁶ is each independently H, F, or CF₃; e is an integer of 0 to 3; f is an integer of 0 to 3; g is 0 or 1; and Z¹ and Z² are each independently H, F, an alkyl group, or a fluorine-containing alkyl group), and more preferably, in the formula (s1), Z¹ and Z² are F or CF₃, and even more preferably one is F, and the other is CF₃.

Also, -R-CZ¹Z²- in the general formula (I) is preferably represented by the general formula (s2):

-CF₂-O-(CX⁷₂)ₑ-(O)_{g}-CZ¹Z²- (s2)

(wherein X⁷ is each independently H, F, or CF₃; e is an integer of 0 to 3; g is 0 or 1; and Z¹ and Z² are each independently H, F, an alkyl group, or a fluorine-containing alkyl group), and more preferably, in the formula (s2), Z¹ and Z² are F or CF₃, and even more preferably one is F, and the other is CF₃.

-R-CZ¹Z²- of the general formula (I) is preferably -CF₂-O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -O-CF₂CF(CF₃)-O-CF₂CF₂CF₂-, -CF₂-O-CF(CF₃)-, -CF₂-O-C(CF₃)₂-, -CF₂-O-CF₂-CF₂-, - CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, - CF₂-O-CF(CF₃)-CF (CF₃)-, -CF₂-O-CF(CF₃)-C (CF₃)₂-, -CF₂-O-CF (CF₃)CF₂-CF₂-, -CF₂-O-CF(CF₃)CF₂-CF(CF₃)-, -CF₂-O-CF(CF₃)CF₂-C (CF₃)₂-, -CF₂-O-CF(CF₃)CF₂-O-CF₂-, -CF₂-O-CF(CF₃)CF₂-O-CF(CF₃)-, or -CF₂-O-CF(CF₃)CF₂-O-C(CF₃)₂-, more preferably -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, or -CF₂-O-CF(CF₃)CF₂-O-CF(CF₃)-, and even more preferably -O-CF₂CF₂-, or -O-CF₂CF(CF₃)-O-CF₂CF₂-.

It is also preferable that the polymer (I) is highly fluorinated. Except for the anionic group (A⁰) such as a phosphate group moiety (such as CH₂OP(O)(OM)₂) or a sulfate group moiety (such as CH₂OS(O)₂OM), 80% or more, 90% or more, 95% or more, or 100% of the C-H bonds in the polymer (I) are preferably replaced with C-F bonds.

The monomer (I) and the polymer (I) also preferably has a C-F bonds and does not have a C-H bond, except for the anionic group (A⁰). In other words, in the general formula (I), preferably, X¹, X², and X³ are all F, and R is a perfluoroalkylene group having one or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The monomer (I) and the polymer (I) may be partially fluorinated. That is to say, the monomer (I) and the polymer (I) also preferably have at least one hydrogen atom bonded to a carbon atom and at least one fluorine atom bonded to a carbon atom, in the portion excluding the anionic group (A⁰).

The anionic group (A⁰) may be -SO₂M, -SO₃M, -OSO₃M, - COOM, -SO₂NR'CH₂COOM, -CH₂OP(O)(OM)₂, [-CH₂O]₂P(O)(OM), - CH₂CH₂OP(O)(OM)₂, [-CH₂CH₂O]₂P(O)(OM), -CH₂CH₂OSO₃M, -P(O)(OM)₂, - SO₂NR'CH₂CH₂OP(O)(OM)₂, [-SO₂NR'CH₂CH₂O]₂P(O)(OM), -CH₂OSO₃M, - SO₂NR'CH₂CH₂OSO₃M, or -C(CF₃)₂OM. Among them, the anionic group is preferably -SO₃M, -OSO₃M, -COOM, -P(O)(OM)₂, or -C(CF₃)₂OM, more preferably -COOM, -SO₃M, -OSO₃M, -P(O)(OM)₂, or -C(CF₃)₂OM, even more preferably -SO₃M, -COOM, or -P(O) (OM)₂, and particularly preferably -SO₃M or -COOM.

M is H, a metal atom, NR⁷₄, imidazolium optionally having a substituent, pyridinium optionally having a substituent, or phosphonium optionally having a substituent, wherein R⁷ is H or an organic group.

Examples of the metal atom include alkali metals (Group 1) and alkaline earth metals (Group 2), and preferred is Na, K, or Li.

M is preferably -H, a metal atom, or NR⁷₄, more preferably -H, an alkali metal (Group 1), an alkaline earth metal (Group 2), or NR⁷₄, still more preferably -H, -Na, -K, - Li, or -NH₄, further preferably -H, -Na, -K, or -NH₄, particularly preferably -H, -Na or -NH₄, and most preferably - H, or -NH₄.

In the polymer (I), each polymerized unit (I) may have a different anionic group or may have the same anionic group.

It is also preferable that the monomer (I) is a monomer represented by the general formula (Ia).

The polymer (I) is also preferably a polymer containing a polymerized unit (Ia) derived from a monomer represented by the general formula (Ia):

CF₂=CF-O-Rf⁰-A⁰ (Ia)

wherein A⁰ is an anionic group; and Rf⁰ is a perfluorinated divalent linking group that is perfluorinated, may be a linear or branched, cyclic or acyclic, saturated or unsaturated, substituted or unsubstituted, and optionally contains one or more heteroatoms selected from the group consisting of sulfur, oxygen, and nitrogen.

The monomer (I) is also preferably a monomer represented by the general formula (Ib).

The polymer (I) is also preferably a polymer comprising a polymerized unit (Ib) derived from a monomer represented by the following general formula (Ib):

CH₂=CH-O-Rf⁰-A⁰ (Ib)

wherein A⁰ is an anionic group, and Rf⁰ is a perfluorinated divalent linking group as defined by the formula (Ia).

In a preferable embodiment, A⁰ in the general formula (I) is a sulfate group. A⁰ is, for example, -CH₂OSO₃M, - CH₂CH₂OSO₃M, or -SO₂NR'CH₂CH₂OSO₃M, wherein R' is H or an alkyl group having 1 to 4 carbon atoms, and M is as described above.

When A⁰ is a sulfate group, examples of the monomer represented by the general formula (I) include, for example, CF₂=CF(OCF₂CF₂CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH(O(CF₂)₄CH₂OSO₃M), CF₂=CF(OCF₂CF₂SO₂N(CH₃)CH₂CH₂OSO₃M), CH₂=CH(OCF₂CF₂CH₂OSO₃M), CF₂=CF(OCF₂CF₂CF₂CF₂SO₂N(CH₃)CH₂CH₂OSO₃M), and CH₂=CH(OCF₂CF₂CF₂CH₂OSO₃M). In the formula, M is as described above.

In a preferable embodiment, A⁰ in the general formula (I) is a sulfonate group. A⁰ is, for example, -SO₃M, wherein M is as described above.

When A⁰ is a sulfonate group, examples of the monomer represented by the general formula (I) include CF₂=CF(OCF₂CF₂SO₃M), CF₂=CF(O(CF₂)₃SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(OCF₂CF₂SO₃M), CF₂=CF(OCF₂CF(CF₃)OCF₂CF₂CF₂CF₂SO₃M), CH₂=CH(O(CF₂)₄SO₃M), and CH₂=CH(O(CF₂)₃SO₃M). In the formula, M is as described above.

In a preferable embodiment, A⁰ in the general formula (I) is a carboxylate group. A⁰ is, for example, COOM or SO₂NR'CH₂COOM, wherein R' is H or an alkyl group having 1 to 4 carbon atoms, and M is as described above. When A⁰ is a carboxylate group, examples of the monomer represented by the general formula (I) include CF₂=CF(OCF₂CF₂COOM), CF₂=CF(O(CF₂)₃COOM), CF₂=CF(O(CF₂)₄COOM), CF₂=CF(O(CF₂)₅COOM), CF₂=CF(OCF₂CF(CF₃)COOM), CF₂=CF(OCF₂CF(CF₃)O(CF₂)ₙCOOM) wherein n is greater than 1, CH₂=CH(OCF₂CF₂COOM), CH₂=CH(O(CF₂)₄COOM), CH₂=CH(O(CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR'CH₂COOM), CF₂=CF(OCF₂CF(CF₃)OCF₂CF₂SO₂NR'CH₂COOM), CH₂=CH(OCF₂CF₂SO₂NR'CH₂COOM), CF₂=CF(OCF₂CF(CF₃)OCF₂CF₂CF₂CF₂SO₂NR'CH₂COOM), CH₂=CH(O(CF₂)₄SO₂NR'CH₂COOM), CH₂=CH(O(CF₂)₃SO₂NR'CH₂COOM), and the like. In the formulas, R' is H or an alkyl group having 1 to 4 carbon atoms, and M is as described above.

In a preferable embodiment, A⁰ in the general formula (I) is a phosphate group. A⁰ is, for example, -CH₂OP(O)(OM)₂, [-CH₂O]₂P(O)(OM), -CH₂CH₂OP(O)(OM)₂, [-CH₂CH₂O]₂P(O)(OM), [-SO₂NR'CH₂CH₂O]₂P(O)(OM), or SO₂NR'CH₂CH₂OP(O)(OM)₂, wherein R' is an alkyl group having 1 to 4 carbon atoms, and M is as described above.

When A⁰ is a phosphate, examples of the monomer represented by the general formula (I) include CF₂=CF(OCF₂CF₂CH₂OP(O)(OM)₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(OCF₂CF₂CH₂OP(O)(OM)₂), CH₂=CH(O(CF₂)₄CH₂OP(O)(OM)₂), CH₂=CH(O(CF₂)₃CH₂OP(O)(OM)₂), and the like. In the formulae, M is as described above.

In a preferable embodiment, A⁰ in the general formula (I) is a phosphonate group. When A⁰ is a phosphonate group, examples of the monomer represented by the general formula (I) include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(OCF₂CF₂P(O)(OM)₂), CH₂=CH(O(CF₂)₄P(O)(OM)₂), and CH₂=CH(O(CF₂)₃P(O)(OM)₂), and in the formula, M is as described above.

The monomer (I) is preferably a monomer (1) represented by the general formula (1).

The polymer (I) is preferably a polymer (1) containing a polymerized unit (1) derived from a monomer represented by the general formula (1):

CX₂=CY(-CZ₂-O-Rf-A) (1)

wherein X is the same or different and is -H or F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or -C(CF₃)₂OM (wherein M is -H, a metal atom, -NR⁷₄, imidazolium optionally having a substituent, pyridinium optionally having a substituent, or phosphonium optionally having a substituent, and R⁷ is H or an organic group), provided that at least one of X, Y, and Z contains a fluorine atom.

The polymer (1) may be a homopolymer of the monomer (1) represented by the general formula (1), or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (1), X is -H or F. Both X may be -F, or at least one may be -H. For example, one may be -F and the other may be -H, or both may be -H.

In the general formula (1), Y is -H, -F, an alkyl group, or a fluorine-containing alkyl group. The alkyl group is an alkyl group not containing a fluorine atom, and has one or more carbon atoms. The alkyl group preferably has 6 or less carbon atoms, more preferably 4 or less carbon atoms, and still more preferably 3 or less carbon atoms. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Y is preferably -H, -F, or CF₃, and more preferably -F.

In the general formula (1), Z is the same or different, and is -H, -F, an alkyl group, or a fluoroalkyl group. The alkyl group is an alkyl group not containing a fluorine atom, and has one or more carbon atoms. The alkyl group preferably has 6 or less carbon atoms, more preferably 4 or less carbon atoms, and still more preferably 3 or less carbon atoms. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Z is preferably -H, -F, or CF₃, and more preferably -F.

In the general formula (1), at least one of X, Y, and Z contains a fluorine atom. For example, X may be -H, and Y and Z may be -F.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, even more preferably 10 or less carbon atoms, particularly preferably 6 or less carbon atoms, and most preferably 3 or less carbon atoms. Examples of the fluorine-containing alkylene group include -CF₂-, -CH₂CF₂-, - CF₂CF₂-, -CF₂CH₂-, -CF₂CF₂CF₂-, -CF₂CF₂CH₂-, -CF(CF₃)-, - CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group, for example, represented by the general formula: 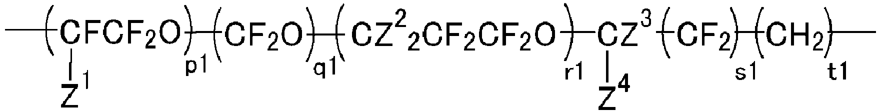 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF(CF₃)CF₂-O-CF(CF₃)-, -(CF(CF₃)CF₂-O)ₙ-CF(CF₃)- (wherein n is an integer of 1 to 10), -CF(CF₃)CF₂-O-CF{(CF₃)CH₂-, -(CF(CF₃)CF₂-O)ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, -CF₂CF₂O-CF₂-, -CF₂CF₂O-CF₂CH₂-, and the like. The fluorine-containing alkylene group having an ether bond is preferably a perfluoroalkylene group.

In the general formula (1), A is -COOM, -SO₃M, -OSO₃M, or -C(CF₃)₂OM (wherein M is H, a metal atom, NR⁷₄, imidazolium optionally having a substituent, pyridinium optionally having a substituent, or phosphonium optionally having a substituent, wherein R⁷ is H or an organic group).

R⁷ is preferably H or a C₁₋₁₀ organic group, more preferably H or a C₁₋₄ organic group, and still more preferably H or a C₁₋₄ alkyl group.

Examples of the metal atom include alkali metals (Group 1) and alkaline earth metals (Group 2), and preferred is Na, K, or Li.

M is preferably H, a metal atom, or NR⁷₄, more preferably H, an alkali metal (Group 1), an alkaline earth metal (Group 2), or NR⁷₄, even more preferably H, Na, K, Li, or NH₄, yet more preferably H, Na, K, or NH₄, particularly preferably H, Na or NH₄, and most preferably H or NH₄.

A is preferably -COOM or -SO₃M.

Examples of the monomer represented by the general formula (1) include the monomer represented by the general formula (1a):

CX₂=CFCF₂-O-(CF(CF₃)CF₂O)ₙ₅-CF(CF₃)-A (1a)

wherein each X is the same and represents F or H; n5 represents 0 or an integer of 1 to 10; and A is as defined above.

In the general formula (1a), n5 is preferably 0 or an integer of 1 to 5, more preferably 0, 1, or 2, and even more preferably 0 or 1, from the viewpoint of obtaining particles having a small primary particle size.

The polymer (1) may be a homopolymer of the monomer represented by the general formula (1a) or a copolymer with a further monomer.

The monomer (1) is preferably a monomer represented by the general formula (1A) below.

The polymerized unit (1) is preferably a polymerized unit (1A) derived from a monomer represented by the general formula (1A):

CH₂=CF(-CF₂-O-Rf-A) (1A)

wherein Rf and A are as described above.

The polymer (1) may be a homopolymer of the monomer represented by the general formula (1A), or may be a copolymer with a further monomer.

Specific examples of the monomer represented by the formula (1A) include a monomer represented by the following general formula: 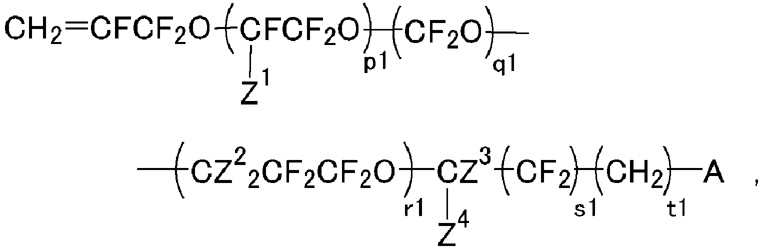 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5, provided that when Z³ and Z⁴ are both H, p1+q1+r1+s1 is not 0; and A is as defined above. More specific examples preferably include:

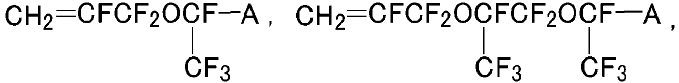

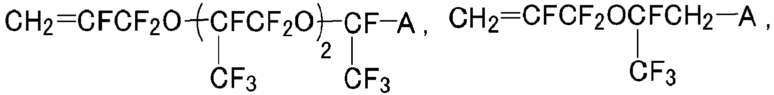

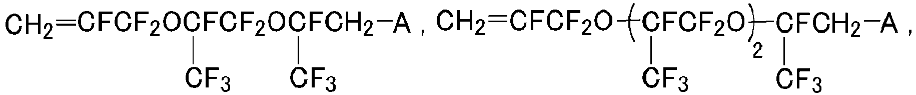

CH₂=CFCF₂OCH₂CF₂-A, CH₂=CFCF₂O(CH₂CF₂CF₂O)CH₂CF₂-A,

CH₂=CFCF₂OCH₂OF₂CH₂-A,

CH₂=CFCF₂O(CH₂CF₂CF₂O)CH₂CF₂CH₂-A,

CH₂=CFCF₂OCF₂CF₂-A, CH₂=CFCF₂O(CF₂CF₂CF₂O)CF₂CF₂-A,

CH₂=CFCF₂OCF₂CF₂CH₂-A,

CH₂=CFCF₂O(CF₂CF₂CF₂O)CF₂CF₂CH₂-A,

CH₂=CFCF₂OCF₂-A, CH₂=CFCF₂O(CF₂CF₂O)CF₂-A,

CH₂=CFCF₂OCF₂CH₂-A,

CH₂=CFCF₂O(CF₂CF₂O)CF₂CH₂-A,

Of these, preferred are:

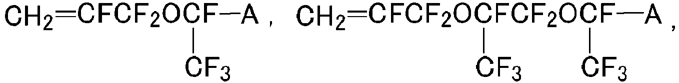

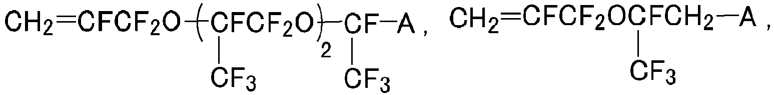

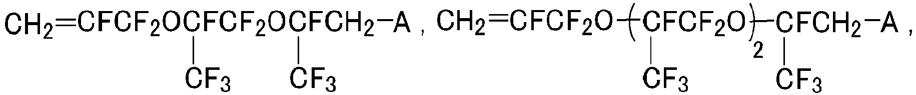

.

In the monomer represented by the general formula (1A), A in the formula (1A) is preferably -COOM, and, in particular, at least one selected from the group consisting of CH₂=CFCF₂OCF(CF₃)COOM and CH₂=CFCF₂OCF(CF₃)CF₂OCF(CF₃)COOM (wherein M is as defined above) is preferable, and CH₂=CFCF₂OCF(CF₃)COOM is more preferable.

Examples of the monomer represented by the general formula (1) further include monomers represented by the following formula:

CF₂=CFCF₂-O-Rf-A

wherein Rf and A are as described above.

More specifically, examples include

CF₂=CFCF₂OCF₂CF₂CF₂-A,

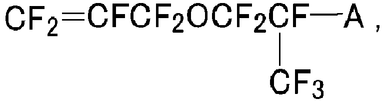

CF₂=CFCF₂OCF₂CF₂CF₂CH₂-A,

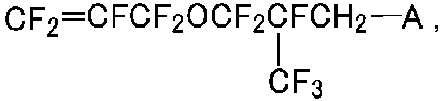

and the like.

The monomer (I) is also preferably a monomer (2) represented by the general formula (2).

The polymer (I) is also preferably a polymer (2) containing a polymerized unit (2) derived from a monomer represented by the general formula (2):

CX₂=CY(-O-Rf -A) (2)

wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

The polymer (2) may be a homopolymer of the monomer represented by the general formula (2) or may be a copolymer with a further monomer.

In the general formula (2), X is -H or F. Both X may be -F, or at least one may be -H. For example, one may be -F and the other may be -H, or both may be -H.

In the general formula (2), Y is -H, -F, an alkyl group, or a fluorine-containing alkyl group. The alkyl group is an alkyl group not containing a fluorine atom, and has one or more carbon atoms. The alkyl group preferably has 6 or less carbon atoms, more preferably 4 or less carbon atoms, and still more preferably 3 or less carbon atoms. The fluorine-containing alkyl group is an alkyl group containing at least one fluorine atom, and has one or more carbon atoms. The number of carbon atoms of the fluorine-containing alkyl group is preferably 6 or less, more preferably 4 or less, and even more preferably 3 or less. Y is preferably -H, -F, or -CF₃, and more preferably -F.

In the general formula (2), at least one of X and Y preferably contains a fluorine atom. For example, X may be -H, and Y and Z may be -F.

In the general formula (2), Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. The fluorine-containing alkylene group having 2 to 100 carbon atoms and having an ether bond is an alkylene group that does not include a structure in which an oxygen atom is an end and that contains an ether bond between carbon atoms.

The number of carbon atoms of the fluorine-containing alkylene group of Rf is preferably 2 or more. The number of carbon atoms is preferably 30 or less, more preferably 20 or less, even more preferably 10 or less, and particularly preferably 5 or less. Examples of the fluorine-containing alkylene group include -CF₂-, -CH₂CF₂-, -CF₂CF₂-, -CF₂CH₂-, - CF₂CF₂CH₂-, -CF(CF₃)-, -CF(CF₃)CF₂-, -CF(CF₃)CH₂-, -CF₂CF₂CF₂-, and -CF₂CF₂CF₂CF₂-. The fluorine-containing alkylene group is preferably a perfluoroalkylene group, and more preferably an unbranched linear perfluoroalkylene group.

The fluorine-containing alkylene group having an ether bond preferably has 3 or more carbon atoms. The fluorine-containing alkylene group having an ether bond preferably has 60 or less carbon atoms, more preferably 30 or less carbon atoms, still more preferably 12 or less carbon atoms, and particularly preferably 5 or less carbon atoms. The fluorine-containing alkylene group having an ether bond is also preferably a divalent group, for example, represented by the general formula: 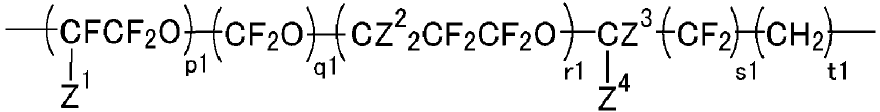 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF₂CF(CF₃)OCF₂CF₂-, -CF₂CF(CF₃)OCF₂CF₂CF₂-, -CF (CF₃)CF₂-O-CF (CF₃)-, - (CF (CF₃)CF₂-O)ₙ-CF(CF₃)- (wherein n is an integer of 1 to 10), -CF (CF₃)CF₂-O-CF(CF₃)CH₂-, - (CF (CF₃)CF₂-O)ₙ-CF(CF₃)CH₂-(wherein n is an integer of 1 to 10), -CH₂CF₂CF₂O-CH₂CF₂CH₂-, - CF₂CF₂CF₂O-CF₂-, -CF₂CF₂CF₂O-CF₂CF₂-, -CF₂CF₂CF₂O-CF₂CF₂CF₂-, - CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

The fluorine-containing alkylene group having a keto group preferably has 3 or more carbon atoms. The fluorine-containing alkylene group having a keto group preferably has 60 or less carbon atoms, more preferably 30 or less carbon atoms, still more preferably 12 or less carbon atoms, and particularly preferably 5 or less carbon atoms.

Specific examples of the fluorine-containing alkylene group having a keto group include -CF₂CF(CF₃)CO-CF₂-, - CF₂CF(CF₃)CO-CF₂CF₂-, -CF₂CF(CF₃)CO-CF₂CF₂CF₂-, and -CF₂CF(CF₃)CO-CF₂CF₂CF₂CF₂-. The fluorine-containing alkylene group having a keto group is preferably a perfluoroalkylene group.

Water may be added to the keto group in the fluorine-containing alkylene group. Accordingly, the monomer (2) may be a hydrate. Examples of the fluorine-containing alkylene group in which water is added to the keto group include - CF₂CF(CF₃)C(OH)₂-CF₂-, -CF₂CF(CF₃)C(OH)₂-CF₂CF₂-, - CF₂CF(CF₃)C(OH)₂-CF₂CF₂CF₂-, and -CF₂CF(CF₃)C (OH) ₂-CF₂CF₂CF₂CF₂-.

The monomer represented by the general formula (2) is preferably at least one selected from the group consisting of monomers represented by the following general formulas (2a), (2b), (2c), (2d), (2e), (2f), and (2g):

CF₂=CF-O-(CF₂)ₙ₁-A (2a)

wherein n1 represents an integer of 1 to 10, and A is as defined above;

CF₂=CF-O-(CF₂C(CF₃)F)ₙ₂-A (2b)

wherein n2 represents an integer of 1 to 5, and A is as defined above;

CF₂=CF-O-(CFX¹)ₙ₃-A (2c)

wherein X¹ represents F or CF₃, n3 represents an integer of 1 to 10, and A is as defined above;

CF₂=CF-O-(CF₂CFX¹O)ₙ₄-(CF₂)ₙ₆-A (2d)

wherein n4 represents an integer of 1 to 10, n6 represents an integer of 1 to 3, and A and X¹ are as defined above;

CF₂=CF-O-(CF₂CF₂CFX¹O)ₙ₅-CF₂CF₂CF₂-A (2e)

wherein n5 represents an integer of 0 to 10, and A and X¹ are as defined above;

CF₂=CF-O-(CF₂)ₙ₇-O-(CF₂)ₙ₈-A (2f)

wherein n7 represents an integer of 1 to 10, n8 represents an integer of 1 to 3, and A is as defined above; and

CF₂=CF[OCF₂CF(CF₃)]ₙ₉O(CF₂)ₙ₁₀O[CF(CF₃)CF₂O]ₙ₁₁CF(CF₃)-A (2g)

wherein n9 represents an integer of 0 to 5, n10 represents an integer of 1 to 8, n11 represents an integer of 0 to 5, and A is as defined above.

In the general formula (2a), n1 is preferably an integer of 5 or less, and more preferably an integer of 2 or less.

Examples of the monomer represented by the general formula (2a) include CF₂=CF-O-CF₂COOM, CF₂=CF(OCF₂CF₂COOM), CF₂=CF(O(CF₂)₃COOM), CF₂=CF(OCF₂CF₂SO₃M), CF₂=CFOCF₂SO₃M, CF₂=CFOCF₂CF₂CF₂SO₃M (wherein M is as defined above) .

In the general formula (2b), n2 is preferably an integer of 3 or less from the viewpoint of dispersion stability of the resulting composition.

In the general formula (2c), n3 is preferably an integer of 5 or less from the viewpoint of water-solubility, A is preferably -COOM, and M is preferably H, Na, or NH₄.

In the general formula (2d), X¹ is preferably -CF₃ from the viewpoint of dispersion stability of the composition, n4 is preferably an integer of 5 or less from the viewpoint of water-solubility, A is preferably -COOM, and M is preferably H, Na, or NH₄.

Examples of the monomer represented by the general formula (2d) include CF₂=CFOCF₂CF(CF₃)OCF₂CF₂COOM, CF₂=CFOCF₂CF(CF₃)OCF₂COOM, CF₂=CFOCF₂CF(CF₃)OCF₂CF₂CF₂COOM, CF₂=CFOCF₂CF(CF₃)OCF₂SO₃M, CF₂=CFOCF₂CF(CF₃)OCF₂CF₂SO₃M, and CF₂=CFOCF₂CF(CF₃)OCF₂CF₂CF₂SO₃M (wherein M represents H, NH₄, or an alkali metal).

In the general formula (2e), n5 is preferably an integer of 5 or less from the viewpoint of water-solubility, A is preferably -COOM, and M is preferably H or NH₄.

An example of the monomer represented by the general formula (2e) is CF₂=CFOCF₂CF₂CF₂COOM, wherein M represents H, Na, NH₄, or an alkali metal.

In the general formula (2f), n7 is preferably an integer of 5 or less from the viewpoint of water-solubility, and A is preferably -COOM or -SO₃M, and more preferably -COOM. M is preferably H, Na, K, or NH₄.

An example of the monomer represented by the general formula (2f) is CF₂=CF-O-(CF₂)₃-O-CF₂-COOM (wherein M represents H, NH₄, or an alkali metal).

In the general formula (2g), n9 is preferably an integer of 3 or less from the viewpoint of water-solubility, n10 is preferably an integer of 3 or less, n11 is preferably an integer of 3 or less, and A is preferably -COOM or -SO₃M, and more preferably -COOM. M is preferably H, Na, K, or NH₄.

Examples of the monomer represented by the general formula (2g) include CF₂=CFO(CF₂)₂OCF(CF₃)COOM, CF₂=CFOCF₂CF₂OCF(CF₃)CF₂OCF(CF₃)COOM, CF₂=CFOCF₂CF(CF₃)OCF₂CF₂OCF(CF₃)COOM, CF₂=CF[OCF₂CF(CF₃)]₂O(CF₂)]₂O[CF(CF₃)CF₂OCF(CF₃)COOM, and CF₂=CF[OCF₂CF(CF₃)₃O(CF₂)]₂O[CF(CF₃)CF₂O]₃CF(CF₃)COOM (wherein M represents H, NH₄, or an alkali metal).

The monomer (I) is also preferably a monomer (3) represented by the general formula (3).

The polymer (I) is also preferably a polymer (3) containing a polymerized unit (3) derived from a monomer represented by the general formula (3):

CX₂=CY(-Rf-A) (3)

wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

The polymer (3) may be a homopolymer of the monomer represented by the general formula (3) or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (3), Rf is preferably a fluorine-containing alkylene group having 1 to 40 carbon atoms. In the general formula (3), at least one of X and Y preferably contains a fluorine atom.

The monomer represented by the general formula (3) is preferably at least one selected from the group consisting of a monomer represented by the general formula (3a):

CF₂=CF-(CF₂)ₙ₁-A (3a)

wherein n1 represents an integer of 1 to 10, and A is as defined above; and a monomer represented by the general formula (3b):

CF₂=CF-(CF₂C(CF₃)F)ₙ₂-A (3b)

wherein n2 represents an integer of 1 to 5, and A is as defined above.

In the general formula (3a) and the general formula (3b), A is preferably -SO₃M or COOM, and M is preferably H, a metal atom, NR⁷₄, imidazolium optionally having a substituent, pyridinium optionally having a substituent, or phosphonium optionally having a substituent. R⁷ represents H or an organic group.

In the general formula (3a), n1 is preferably an integer of 5 or less, and more preferably an integer of 2 or less. A is preferably -COOM, and M is preferably H or NH₄.

Examples of the monomer represented by the general formula (3a) include CF₂=CFCF₂COOM (wherein M is as defined above).

In the general formula (3b), n2 is preferably an integer of 3 or less from the viewpoint of dispersion stability of the resulting composition, A is preferably -COOM, and M is preferably H or NH₄.

Next, a suitable configuration wherein m is an integer of 2 or more in the general formula (I) will now be described.

It is also preferable that the monomer (I) is at least one selected from the group consisting of monomers represented by the general formula (4a) and the general formula (4b).

The polymer (I) is also preferably a polymer (4) containing a polymerized unit (4) derived from at least one monomer selected from the group consisting of monomers represented by the general formulas (4a) and (4b):

CF₂=CF-CF₂-O-Q^{F1}-CF(-Q^{F2}-CZ¹Z²-A)₂ (4a)

wherein Z¹, Z², and A are as defined above, and Q^{F1} and Q^{F2} are the same or different and are a single bond, a fluorine-containing alkylene group optionally containing an ether bond between carbon atoms, or a fluorine-containing oxyalkylene group optionally containing an ether bond between carbon atoms; and

CF₂=CF-O-Q^{F1}-CF(-Q^{F2}-CZ¹Z²-A)₂ (4b)

wherein Z¹, Z², A, Q^{F1}, and Q^{F2} are as defined above.

Examples of the monomers represented by the general formulae (4a) and (4b) include: 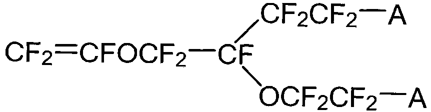 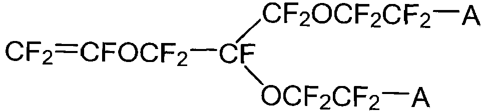 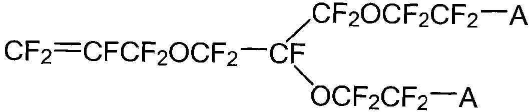 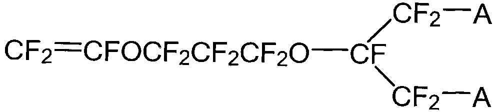 and the like.

The monomer (I) is preferably at least one selected from the group consisting of the monomer (1), monomer (2) and monomer (3), more preferably the monomer (1) or monomer (2), and further preferably the monomer (2).

The polymer (I) is preferably at least one selected from the group consisting of the polymer (1), polymer (2) and polymer (3), more preferably the polymer (1) or polymer (2), and further preferably the polymer (2).

The polymer (I) may be a homopolymer composed solely of the polymerized unit (I), or may be a copolymer containing the polymerized unit (I) and a polymerized unit derived from a further monomer copolymerizable with the monomer represented by the general formula (I). From the viewpoint of solubility in an aqueous medium, a homopolymer composed solely of the polymerized unit (I) is preferable. The polymerized unit (I) may be the same or different at each occurrence, and may contain the polymerized unit (I) derived from two or more different monomers represented by the general formula (I).

The further monomer described above is preferably a monomer represented by a general formula CFR=CR₂ (in the formula, R is independently H, F, or a perfluoroalkyl group having 1 to 4 carbon atoms). Also, the further monomer is preferably a fluorine-containing ethylenic monomer having 2 or 3 carbon atoms. Examples of the further monomer include CF₂=CF₂, CF₂=CFCl, CH₂=CF₂, CFH=CH₂, CFH=CF₂, CF₂=CFCF₃, CH₂=CFCF₃, CH₂=CHCF₃, CHF=CHCF₃ (E isomer), and CHF=CHCF₃ (Z isomer).

In particular, from the viewpoint of good copolymerizability, at least one selected from the group consisting of tetrafluoroethylene (CF₂=CF₂), chlorotrifluoroethylene (CF₂=CFCl), and vinylidene fluoride (CH₂=CF₂) is preferable, and at least one selected from the group consisting of tetrafluoroethylene and vinylidene fluoride is more preferable. Accordingly, the polymerized unit derived from the further monomer is preferably a polymerized unit derived from tetrafluoroethylene. The polymerized unit derived from the further monomer may be the same or different at each occurrence, and the polymer (I) may contain a polymerized unit derived from two or more different further monomers.

Examples of the further monomer further include a monomer represented by the following general formula (n1-2): 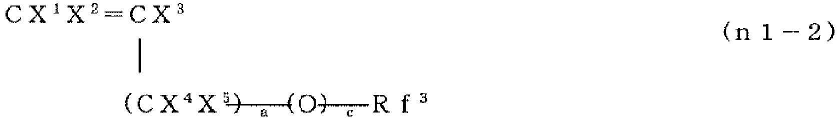 wherein X¹ and X² are the same or different and are each H or F; X³ is H, F, Cl, CH₃, or CF₃; X⁴ and X⁵ are the same or different and are each H or F; and a and c are the same or different and are each 0 or 1; and Rf³ is a fluorine-containing alkyl group having 1 to 40 carbon atoms, or a fluorine-containing alkyl group having 2 to 100 carbon atoms and having an ether bond.

Specifically, preferred examples thereof include CH₂=CFCF₂-O-Rf³, CF₂=CF-O-Rf³, CF₂=CFCF₂-O-Rf³, CF₂=CF-Rf³, CH₂=CH-Rf³, and CH₂=CH-O-Rf³ (wherein Rf³ is as described in the above formula (n1-2)).

Another example of the further monomer is also a fluorine-containing acrylate monomer represented by the following formula (n2-1): 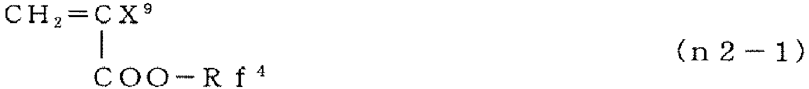 (in the formula, X⁹ is H, F, or CH₃; and Rf⁴ is a fluorine-containing alkyl group having 1 to 40 carbon atoms or a fluorine-containing alkyl group having 2 to 100 carbon atoms and having an ether bond). Examples of the above Rf⁴ group include: 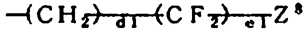
wherein Z⁸ is H, F, or Cl; d1 is an integer of 1 to 4; and e1 is an integer of 1 to 10,

   -CH (CF₃)₂, 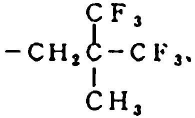 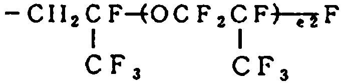
wherein e2 is an integer of 1 to 5, 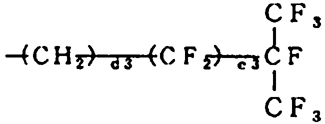
wherein d3 is an integer of 1 to 4; and e3 is an integer of 1 to 10.

Another example of the further monomer is a fluorine-containing vinyl ether represented by the following formula (n2-2) :

CH₂=CHO-Rf⁵ (n2-2)

wherein Rf⁵ is a fluorine-containing alkyl group having 1 to 40 carbon atoms, or a fluorine-containing alkyl group having 2 to 100 carbon atoms and having an ether bond.

Specific preferred examples of the monomer of the general formula (n2-2) include: 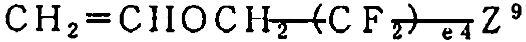
wherein Z⁹ is H or F; and e4 is an integer of 1 to 10, 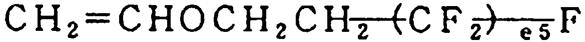
wherein e5 is an integer of 1 to 10, 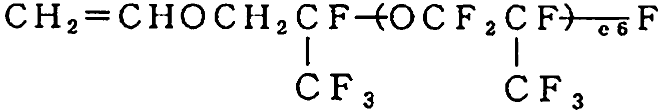
wherein e6 is an integer of 1 to 10.

More specifically, examples thereof include

CH₂=CHOCH₂CF₂CF₂H,

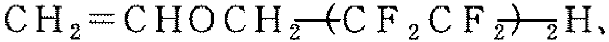

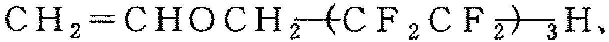

CH₂=CHOCH₂CF₂CF₃,

CH₂=CHOCH₂CF₃,

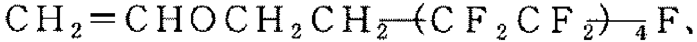

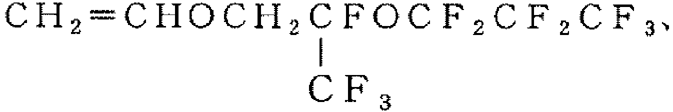

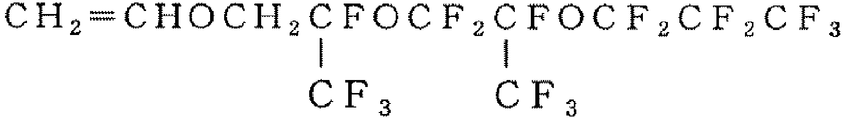

and the like.

Additional examples of the further monomer include a fluorine-containing allyl ether represented by the following general formula (n2-3):

CH₂=CHCH₂O-Rf⁶ (n2-3)

wherein Rf⁶ is a fluorine-containing alkyl group having 1 to 40 carbon atoms, or a fluorine-containing alkyl group having 2 to 100 carbon atoms and having an ether bond; and a fluorine-containing vinyl monomer represented by the following general formula (n2-4):

CH₂=CH-Rf⁷ (n2-4)

wherein Rf⁷ is a fluorine-containing alkyl group having 1 to 40 carbon atoms, or a fluorine-containing alkyl group having 2 to 100 carbon atoms and having an ether bond.

Specific examples of the monomers represented by the general formulas (n2-3) and (n2-4) include monomers such as:

CH₂=CHCH₂OH₂CF₂CF₂H,

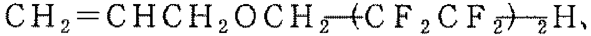

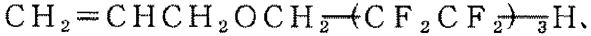

CH₂=CHCH₂OCH₂CF₂CF₃,

CH₂=CHCH₂OCH₂CF₃,

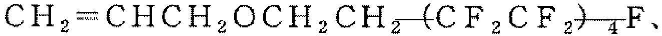

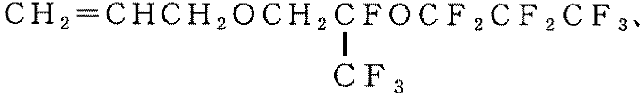

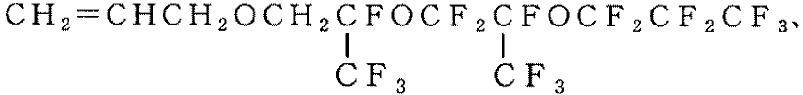

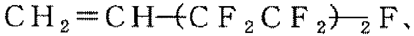

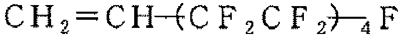

and the like.

The polymer (I) usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or fluoroalkyl group preferably has 1 to 20 carbon atoms. These terminal groups are, in general, produced from an initiator or a chain transfer agent used to form the polymer (I) or produced during a chain transfer reaction.

In the polymer (I), the content of the polymerized unit (I) is, in the preferred order, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, and 90 mol% or more, based on all polymerized units. It is particularly preferable that the content of the polymerized unit (I) is substantially 100 mol%, and it is most preferable that the polymer (I) is composed solely of the polymerized unit (I).

In the polymer (I), the content of the polymerized unit derived from the further monomer copolymerizable with the monomer represented by the general formula (I) is, in the preferred order, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, and 10 mol% or less, based on all polymerized units. It is particularly preferable that the content of the polymerized unit derived from the further monomer copolymerizable with the monomer represented by the general formula (I) is substantially 0 mol%, and it is most preferable that the polymer (I) contains no polymerized unit derived from the further monomer.

In the polymer (1), polymer (2) or polymer (3), the content of the polymerized unit (1), polymerized unit (2) or polymerized unit (3) is, in the preferred order, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, and 90 mol% or more, based on all polymerized units. It is particularly preferable that the content of the polymerized unit (1), polymerized unit (2) or polymerized unit (3) is substantially 100 mol%, and it is most preferable that the polymer (1), polymer (2) or polymer (3) consists only of the polymerized unit (2) or polymerized unit (3).

In the polymer (1), polymer (2) or polymer (3), the content of the polymerized unit based on the further monomer copolymerizable with the polymerized unit (1), polymerized unit (2) or polymerized unit (3) is, in the preferred order, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, and 10 mol% or less, based on all polymerized units. It is particularly preferable that the content of the polymerized unit based on the further monomer copolymerizable with the polymerized unit (1), polymerized unit (2) or polymerized unit (3) is substantially 0 mol%, and it is most preferable that the polymer (1), polymer (2) or polymer (3) is free of polymerized units based on the further monomer.

The number-average molecular weight of the polymer (I), allowing the polymer (I) to be recovered at a high recovery rate, is preferably more than 0.1 × 10⁴, 0.2 × 10⁴ or more, 0.3 × 10⁴ or more, 0.4 × 10⁴ or more, 0.5 × 10⁴ or more, 1.0 × 10⁴ or more, 3.0 × 10⁴ or more, or 3.1 × 10⁴ or more. The number-average molecular weight of the polymer (I) is preferably 75.0 × 10⁴ or less, 50.0 × 10⁴ or less, 40.0 × 10⁴ or less, 30.0 × 10⁴ or less, or 20.0 × 10⁴ or less.

The weight average molecular weight of the polymer (I) is preferably 0.2 × 10⁴ or more, 0.4 × 10⁴ or more, 0.6 × 10⁴ or more, 0.8 × 10⁴ or more, 1.0 × 10⁴ or more, 2.0 × 10⁴ or more, 5.0 × 10⁴ or more, 10.0 × 10⁴ or more, 15.0 × 10⁴ or more, 20.0 × 10⁴ or more, or 25.0 × 10⁴ or more. The weight-average molecular weight of the polymer (I) is preferably 150.0× 10⁴ or less, 100.0× 10⁴ or less, 60.0× 10⁴ or less, 50.0× 10⁴ or less, or 40.0× 10⁴ or less.

The number-average molecular weight and weight-average molecular weight of the polymer (I) are those calculated by gel permeation chromatography (GPC) using monodisperse polystyrenes as standards. Also, when measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in accordance with JIS K 7210.

The number-average molecular weight of polymer (1), polymer (2) or polymer (3) is preferably more than 0.1 × 10⁴, 0.2 × 10⁴ or more, 0.3 × 10⁴ or more, 0.4 × 10⁴ or more, 0.5 × 10⁴ or more, 1.0 × 10⁴ or more, 3.0 × 10⁴ or more, or 3.1 × 10⁴ or more because the polymer (1), polymer (2) or polymer (3) can be recovered at a higher recovery rate. The number-average molecular weight of the polymer (1), polymer (2) or polymer (3) is preferably 75.0 × 10⁴ or less, 50.0 × 10⁴ or less, 40.0 × 10⁴ or less, 30.0 × 10⁴ or less, or 20.0 × 10⁴ or less.

The weight-average molecular weight of the polymer (1), polymer (2) or polymer (3) is preferably 0.2 × 10⁴ or more, 0.4 × 10⁴ or more, 0.6 × 10⁴ or more, 0.8 × 10⁴ or more, 1.0 × 10⁴ or more, 2.0 × 10⁴ or more, 5.0 × 10⁴ or more, 10.0 × 10⁴ or more, 15.0 × 10⁴ or more, 20.0 × 10⁴ or more, or 25.0 × 10⁴ or more. The weight-average molecular weight of the polymer (1), polymer (2) or polymer (3) is preferably 150.0 × 10⁴ or less, 100.0 × 10⁴ or less, 60.0 × 10⁴ or less, 50.0 × 10⁴ or less, or 40.0 × 10⁴ or less.

The-number average molecular weight and weight-average molecular weight of polymer (1), polymer (2), or polymer (3) are those calculated by gel permeation chromatography (GPC) using monodisperse polystyrenes as standards. When measurement by GPC is not possible, the number-average molecular weight of the polymer (1), polymer (2), or polymer (3) can be determined from correlation between the number-average molecular weight calculated from the number of terminal groups obtained by NMR, FT-IR, or the like, and a melt flow rate. The melt flow rate can be measured in accordance with JIS K 7210.

The polymer (I) preferably has an ion exchange rate (IXR) of 53 or less. The IXR is defined as the number of carbon atoms in the polymer backbone relative to the ionic groups. Precursor groups that become ionic by hydrolysis (for example, -SO₂F) are not considered to be ionic groups, for the purpose of determining the IXR.

The IXR of the polymer (I) is preferably 0.5 or more, 1 or more, 3 or more, 4 or more, 5 or more, or 8 or more. The IXR of the polymer (I) is preferably 43 or less, 33 or less, or 23 or less.

The ion exchange capacity of the polymer (I) is preferably 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.50 meq/g or more. The ion exchange capacity is the content of ionic groups (anionic groups) in the polymer (I), and can be calculated from the composition of the polymer (I).

In the polymer (I), the ionic groups (anionic groups) are typically distributed along the polymer backbone. The polymer (I) contains the polymer backbone together with a repeating side chain bonded to this backbone, and this side chain preferably has an ionic group.

The polymer (I) preferably contains an ionic group having a pKa of less than 10, and more preferably less than 7. The ionic group of the polymer (I) is preferably selected from the group consisting of sulfonate, carboxylate, phosphonate, and phosphate.

The term "sulfonate, carboxylate, phosphonate, and phosphate" is intended to refer to the respective salts or the respective acids that can form the salts. When a salt is used, that salt is preferably an alkali metal salt or an ammonium salt. The preferred ionic group is a sulfonate group.

As the water-soluble fluorine-containing polymer, a polyfunctional fluoropolyether dispersant represented by the following general formula:

T^{X}-O-[R_{f}¹-O]ₙ₁[R_{f}²-O]ₙ₂-T^{X'}

(wherein
T^{x} and T^{X'} are each independently at least one selected from the group consisting of a (hydro) (fluoro) carbon group having 1 to 24 carbon atoms and having one or more ionic groups (X), as well as a (hydro) (fluoro) carbon group having 1 to 24 carbon atoms, which may contain one or more of H, O, and Cl (provided that a group having an ionic group (X) is excluded); Rf¹ may be the same or different at each occurrence, and is a perfluoroalkylene group having 1 to 7 carbon atoms;
Rf² may be the same or different at each occurrence and is a perfluoroalkylene group having 1 to 11 carbon atoms and having one or more ionic groups (X);
n1 and n2 are integers of 1 or greater;
the ionic group (X) is at least one selected from the group consisting of -SO₃Xₐ, -PO₃Xₐ, and -COOXₐ (Xₐ is H, an ammonium group, or a monovalent metal).

In the formula, T^{X}, T^{X'}, Rf¹, Rf², n1 and n2 are combined so that the number-average molecular weight falls within the above-described range.

In the general formula representing the polyfunctional fluoropolyether dispersant, examples of the repeating unit - Rf¹-O- include, for example, -CF₂CF₂O-, -CFYO-, -CF₂CFYO-, - CF₂O-, -CF₂(CF₂)_{z}CF₂O- (wherein Y is a fluoro (oxy) alkyl group having 1 to 5 carbon atoms; and z is 1 or 2).

In the general formula representing the polyfunctional fluoropolyether dispersant, examples of the repeating unit - Rf²-O- include, for example, -CF₂CF(Gₓ)O-, -CF(Gₓ)O-, - CF₂(CF₂)ₓ₁CF(Gₓ)(CF₂)ₓ₂O- (wherein Gₓ is a perfluoro (oxy) alkyl group having 1 to 5 carbon atoms and having one or more ionic groups (X), and X1 and X2 are independently integers of 0 to 3, with the proviso that a sum of X1 and X2 is 1 or more).

Examples of T^{x} and T^{X'} include, for example,
an ionic group represented by -CFZ*-COOXₐ, -CFZ*CH₂-COOXₐ or - CFZ*-CH₂(OCH_{2C}H₂)ₖ-COOXₐ (wherein Z* is F or CF₃; k is an integer of 0 to 10; and Xₐ is H, an ammonium group, or a monovalent metal); and
a nonionic (per) fluoroalkyl group having 1 to 3 carbon atoms, which may contain one or more of H, O, and Cl (e.g., -CF₂Cl, - CF₃, etc.).

An example of such a polyfunctional fluoropolyether dispersant is the dispersant (D) described in International Publication No. WO 2019/048394.

Also, a fluoropolyether acid or a salt thereof can be used as the water-soluble fluorine-containing polymer.

The fluoropolyether acid may be a fluoropolyether acid having a repeating unit represented by any one of formulae (11a) to (11d).

(-CFCF₃-CF₂-O-)ₙ (11a)

(-CF₂-CF₂-CF₂-O-)ₙ (11b)

(-CF₂-CF₂-O-)ₙ-(-CF₂-O-)ₘ (11c)

and

(-CF₂-CFCF₃-O-)ₙ-(-CF₂-O-)ₘ (11d)

(In the formula, m and n are integers of 1 or more.)

m and n in the formula are integers of 1 or more, and are combined so that the number-average molecular weight falls within the above range.

The fluoropolyether acid can have an acid group or an acid salt group at one or both ends. For a monofunctional fluoropolyether acid having an acid group or an acid salt group at one end, the other end of the molecule is usually perfluorinated, but may contain hydrogen or a chlorine atom.

The fluoropolyether acid is preferably a carboxylic acid, a sulfonic acid, a sulfonamide, or a phosphonic acid, and more preferably a carboxylic acid. Among the fluoropolyether acids or salts thereof, a salt of the fluoropolyether acid is preferred, an ammonium salt of the fluoropolyether acid is more preferred, with an ammonium salt of fluoropolyether carboxylic acid being still more preferred.

As such fluoropolyether acid or a salt thereof, compounds represented by the following formulae:

CF₃-CF₂-CF₂-O(-CFCF₃-CF₂-O-)ₙCFCF₃-COOH,

CF₃-CF₂-CF₂-O(-CF₂-CF₂-CF₂-O-)ₙ-CF₂-CF₂COOH,

or

HOOC-CF₂-O(-CF₂-CF₂-O-)ₙ-(-CF₂-O-)ₘCF₂COOH,

(wherein m and n are the same as those described above) or a salt thereof are preferred.

Examples of the fluoropolyether acid or a salt thereof include, for example, the fluoropolyether acids or salts thereof described in International publication No. WO 2000/071590 and International Publication No. WO 2008/060461.

Although the embodiments have been described above, it will be understood that a wide variety of modifications can be made in the form and details without departing from the spirit and scope of the claims.
<1> According to the first aspect of the present disclosure,
   there is provided a method for recovering a water-soluble fluorine-containing polymer, comprising mixing a composition containing the water-soluble fluorine-containing polymer having a number-average molecular weight of more than 0.1 x 10⁴ and water with a cationic polymer, to thereby recover the water-soluble fluorine-containing polymer from the composition.
<2> According to the second aspect of the present disclosure,
   there is provided the method for recovering according to the first aspect, comprising mixing the composition with the cationic polymer, generating an agglomerate containing the water-soluble fluorine-containing polymer and the cationic polymer, and separating the water and the agglomerate, to thereby recover the water-soluble fluorine-containing polymer as the agglomerate.
<3> According to the third aspect of the present disclosure,
   there is provided the method for recovering according to the first or second aspect, wherein the cationic polymer is at least one selected from the group consisting of a polyethyleneimine, a poly(diallyldimethylammonium) and a salt thereof, a poly(trimethylaminoethyl methacrylate) and a salt thereof, a poly(dimethylaminoethyl methacrylate), a dimethylamine-epichlorohydrin condensate, a dicyandiamide-formalin condensate, and a dicyandiamide-diethylenetriamine condensate.
<4> According to the fourth aspect of the present disclosure,
   there is provided the method for recovering according to any one of the first to third aspects, wherein an amount of the cationic polymer is 1 to 10,000% by mass based on a mass of the water-soluble fluorine-containing polymer.
<5> According to the fifth aspect of the present disclosure,
   there is provided the method for recovering according to any one of the first to fourth aspects, wherein a number-average molecular weight of the water-soluble fluorine-containing polymer is 0.3 x 10⁴ or more.
<6> According to the sixth aspect of the present disclosure,
   there is provided the method for recovering according to any one of the first to fifth aspects, wherein the water-soluble fluorine-containing polymer has an ionic group.
<7> According to the seventh aspect of the present disclosure,
   there is provided the method for recovering according to any one of the first to sixth aspects, wherein the water-soluble fluorine-containing polymer is a polymer (I) comprising a polymerized unit (I) based on a monomer (I) represented by the general formula (I):

   CX¹X³=CX²R(-CZ¹Z²-A⁰)ₘ (I)

   wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.
<8> According to the eighth aspect of the present disclosure,
   there is provided the method for recovering according to the seventh aspect, wherein a number-average molecular weight of the polymer (I) is 0.3 × 10⁴ or more.
<9> According to the ninth aspect of the present disclosure,
   there is provided the method for recovering according to the seventh or eighth aspect, wherein an ion exchange rate of the polymer (I) is 53 or less.
<10> According to the tenth aspect of the present disclosure,
   there is provided the method for recovering according to any one of the first to ninth aspects, wherein a content of the water-soluble fluorine-containing polymer in the composition is more than 0% by mass and 1% by mass or less, based on the mass of the composition.
<11> According to the eleventh aspect of the present disclosure,
   there is provided the method for recovering according to any one of the first to tenth aspects, wherein a recovery rate of the water-soluble fluorine-containing polymer is 99.0% by mass or more.
<12> According to the twelfth aspect of the present disclosure,
   there is provided the method for recovering according to any one of the first to eleventh aspects, wherein the water-soluble fluorine-containing polymer is at least one selected from the group consisting of a polymer (1) comprising a polymerized unit (1) based on a monomer represented by the general formula (1) and a polymer (2) comprising a polymerized unit (2) based on a monomer represented by the general formula (2), a content of the polymerized unit (1) in the polymer (1) is 90 mol% or more based on all polymerized units of the polymer (1), and a content of the polymerized unit (2) in the polymer (2) is 90 mol% or more based on all polymerized units of the polymer (2),
   the number-average molecular weight of the water-soluble fluorine-containing polymer is 0.3 × 10⁴ to 20.0 × 10⁴,
   the content of the water-soluble fluorine-containing polymer in the composition is 0.020 to 0.2% by mass,
   the cationic polymer is a polyethyleneimine, and
   the amount of the cationic polymer is 30 to 500% by mass based on the mass of the water-soluble fluorine-containing polymer,

      CX₂=CY(-CZ₂-O-Rf-A) (1)

   wherein X is the same or different and is -H or F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, -OSO₃M or -C(CF₃)₂OM, wherein M is -H, a metal atom, -NR⁷₄, an imidazolium optionally having a substituent, a pyridinium optionally having a substituent or a phosphonium optionally having a substituent, and R⁷ is H or an organic group;

      CX₂=CY(-O-Rf -A) (2)
   wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is -COOM, -SO₃M, -OSO₃M or -C(CF₃)₂OM, wherein M is -H, a metal atom, -NR⁷₄, an imidazolium optionally having a substituent, a pyridinium optionally having a substituent or a phosphonium optionally having a substituent, and R⁷ is H or an organic group.
<13> According to the thirteenth aspect of the present disclosure,
   there is provided the method for recovering according to any one of the first to twelfth aspects, comprising
   mixing the composition containing the water-soluble fluorine-containing polymer and water with an inorganic flocculant,
   mixing a composition containing the water-soluble fluorine-containing polymer, water, and the inorganic flocculant with the cationic polymer,
   mixing a composition containing the water-soluble fluorine-containing polymer, water, the inorganic flocculant, and the cationic polymer with at least one selected from the group consisting of an anionic polymer, a nonionic polymer, and an amphoteric polymer,
   generating an agglomerate containing the water-soluble fluorine-containing polymer, the inorganic flocculant, the cationic polymer, and at least one selected from the group consisting of the anionic polymer, the nonionic polymer, and the amphoteric polymer, and
   separating water and the agglomerate.

### EXAMPLES

Hereinafter, the embodiments of the present disclosure will be described with reference to Examples, but the present disclosure is not limited solely to such Examples.

Each numerical value in Examples was measured by the following methods.

### <Molecular Weight of Water-Soluble Fluorine-Containing Polymer>

The molecular weight of polymers 1 to 4 was measured by GPC.

### <Concentration of Water-Soluble Fluorine-Containing Polymer>

The concentrations of the polymers 1 to 4 were measured by liquid chromatography (LC) using a charged particle detector manufactured by Thermo Fisher Scientific Inc., as the detector.

### <Concentration of Perfluorooctanoic Acid>

The concentration of perfluorooctanoic acid was measured by liquid chromatography (LC) using a UV detector at a detection wavelength of 210 nm.

### Example 1

To 1 L of an aqueous solution containing 1,000 ppm by mass of a homopolymer of CF₂=CFOCF₂COOH (polymer 1) having a number-average molecular weight of 18,000 was added 5 g of a 10% by mass aqueous solution of polyethyleneimine under stirring. Immediately after addition, a cloudy solution was obtained, then the solid and liquid therein were separated using a centrifuge, and the liquid portion was measured by liquid chromatography (LC). As a result of the measurement, the concentration of the polymer 1 was less than 1 ppm by mass. Therefore, the recovering of the solid portion was found to enable the polymer 1 to be recovered at a high recovery rate.

### Example 2

To 1 L of an aqueous solution containing 1,000 ppm by mass of a homopolymer of CF₂=CFOCF₂CF₂SO₃H (polymer 2) having a number-average molecular weight of 15,000 was added 4 g of a 10% by mass aqueous solution of polyethyleneimine under stirring. A cloudy solution was obtained and the solid and liquid therein were then separated using a centrifuge, followed by measurement of the liquid portion by liquid chromatography (LC). As a result of the measurement, the concentration of the polymer 2 was less than 1 ppm by mass.

### Example 3

To 1 L of an aqueous solution containing 430 ppm by mass of the polymer 1 having a number-average molecular weight of 18,000, was added 2 g of a 10% by mass aqueous solution of polyethyleneimine under stirring. Immediately after the addition, a cloudy solution was obtained and the solid and liquid therein were then separated using a centrifuge, followed by measurement of the liquid portion by LC. As a result of the measurement, the concentration of the polymer 1 was less than 1 ppm by mass.

### Example 4

To 1 L of an aqueous solution containing 430 ppm by mass of the polymer 1 having a number-average molecular weight of 18,000 was added 1 g of a 10% by mass aqueous solution of aluminum sulfate followed by stirred, and then 2 g of a solution in which a solid content concentration of EPOMIN P-1000 manufactured by NIPPON SHOKUBAI CO., LTD., had been adjusted to 10% by mass was added and stirred for 1 minute. A white floc resulted, the stirring was then stopped, and the solution with the floc was then left to stand for 1 hour to precipitate the floc. The supernatant was collected, and the concentration of the polymer 1 was measured by LC, resulting in a concentration of the polymer 1 of less than 1 ppm by mass.

### Example 5

To 1 L of an aqueous solution containing 860 ppm by mass of the polymer 2 having a number-average molecular weight of 15,000 was added 3 g of a 10% by mass aqueous solution of aluminum sulfate followed by stirred, and then 3 g of a solution in which a solid content concentration of EPOMIN P-3000 manufactured by NIPPON SHOKUBAI CO., LTD., had been adjusted to 10% by mass was added and stirred for 1 minute. A white floc resulted, the stirring was then stopped, and the solution with the floc was then left to stand for 1 hour to precipitate the floc. The supernatant was collected, and the concentration of the polymer 2 was measured by LC, resulting in a concentration of the polymer 2 of less than 1 ppm by mass.

### Example 6

To 1 L of an aqueous solution containing 290 ppm by mass of the polymer 2 having a number-average molecular weight of 15,000 was added 2.5 g of a 10% by mass aqueous solution of aluminum sulfate followed by stirred, and then 2.5 g of a solution in which a solid content concentration of EPOMIN P-3000 manufactured by NIPPON SHOKUBAI CO., LTD., had been adjusted to 10% was added and stirred for 1 minute. The solution became cloudy, but was not precipitated even after having stopped stirring and left the solution to stand for 1 hour. When 2 g of an aqueous solution in which an anionic polymer flocculant (ACOFLOC A-110 manufactured by MT Aquapolymer Co., Ltd.) had been adjusted to a concentration of 0.1% by mass, was added to this solution and stirred, a white floc resulted, the stirring was stopped, and the solution with floc was then left to stand for 1 hour to precipitate the floc. The supernatant was collected and the concentration of polymer 2 was measured by LC, resulting in a concentration of polymer 2 of 1.9 ppm by mass.

### Example 7

To 1 L of an aqueous solution containing 430 ppm by mass of the polymer 2 having a number-average molecular weight of 15,000 was added 3 g of a 10% by mass aqueous solution of aluminum sulfate followed by stirred, and then 1 g of a solution in which a solid content concentration of EPOMIN P-3000 manufactured by NIPPON SHOKUBAI CO., LTD., had been adjusted to 10% was added and stirred for 1 minute. The solution became cloudy, but was not precipitated even after having stopped the stirring and left the solution to stand for 1 hour. When 0.05 g of an anionic polymer flocculant (WATERFLOC A-71, manufactured by Technica Goudou Co., Ltd.) was added to this solution and stirred, a white floc resulted, the stirring was stopped, and the solution with the floc was then left to stand for 1 hour to precipitate the floc. The supernatant was collected and the concentration of polymer 2 was measured by LC, resulting in a concentration of polymer 2 of less than 1 ppm by mass.

### Example 8

To 1 L of an aqueous solution containing 1,000 ppm by mass of a homopolymer of CF₂=CFOCF₂CF₂SO₃H having a number-average molecular weight of 5,300 (polymer 3) was added 4 g of a 10% by mass aqueous solution of polyethyleneimine under stirring. A cloudy solution was obtained and the solid and liquid therein were then separated using a centrifuge, followed by measurement of the liquid portion by liquid chromatography (LC). As a result of the measurement, the concentration of Polymer 3 was determined to be 1.5 ppm by mass.

### Example 9

A 1,000 L coagulation tank equipped with a stirrer was fed with 995 kg of an aqueous solution containing 630 ppm by mass of the Polymer 3 followed by stirring. Under stirring, 754 g of a 27% aqueous solution of aluminum sulfate was added, and 640 g of EPOMIN P-3000 manufactured by NIPPON SHOKUBAI CO., LTD. was then added to precipitate a solid. Under further stirring, 15 g of WATERFLOC L N-52B manufactured by Technica Goudou Co., Ltd., was added and stirred for 10 minutes. The liquid in the coagulation tank was supplied to a decanter type centrifuge BDN006 manufactured by TOMOE Engineering Co., Ltd., using a Mohno Pump NEL16PUN manufactured by HEISHIN Ltd., and solid-liquid separation was carried out at centrifugal force of 2,100 G. As a result, the concentration of the Polymer 3 in the separated water was less than 1 ppm by mass, the suspended substance (SS) concentration was 18 mg/L, and the water content of a sludge was 90% by mass.

### Example 10

To 1 L of an aqueous solution containing 400 ppm of a homopolymer of CH₂=CFCF₂OCF(CF₃)COOH (polymer 4) with a number-average molecular weight of 122,000, was added 1.4 g of a 10% by mass aqueous solution of polyethyleneimine under stirring. A white floc resulted, the stirring was stopped, and the solution with the floc was then left to stand for 1 hour to precipitate the floc. The supernatant was collected and the concentration of the polymer 4 was measured by LC, resulting in a concentration of polymer 4 of less than 1 ppm by mass.

### Comparative Example 1

To 1 L of a solution containing 430 mass ppm of the polymer 1 having a number-average molecular weight of 18,000, was added a total of 20 g in a manner to divide the total amount into five portions and add 4 g each of an aqueous solution in which an anionic polymer flocculant (ACOFLOC A-110 manufactured by MT Aquapolymer, Inc.) had been adjusted to a concentration of 1% by mass while stirred. The solution while added with 4 g to 20 g remained colorless and transparent, no deposit was observed, and the stirring was then stopped after addition of 20 g, and no precipitate was observed even after the solution had been left to stand for one hour.

### Comparative Example 2

To 1 L of a solution containing 430 mass ppm of the polymer 1 having a number-average molecular weight of 15,000, was added a total of 20 g in a manner to divide the total amount into five portions and add 4 g each of an aqueous solution in which a nonionic polymer flocculant (Orfloc ON-1H manufactured by Organo Corporation) had been adjusted to a concentration of 1% by mass while stirred. The solution while added with 4 g to 20 g remained colorless and transparent, no deposit was observed, and the stirring was stopped after addition of 20 g, and no precipitate was observed even after the solution had been left to stand for one hour.

### Comparative Example 3

To 1 L of a solution containing 1,000 ppm by mass of the polymer 1 having a number-average molecular weight of 15,000, was added 10 g of a 10% by mass aqueous solution of aluminum sulfate, and under stirring the solution was neutralized with a 1 mol/L aqueous solution of sodium hydroxide until the pH reached 8. A white translucent precipitate was observed, and after having left the solution to stand for 1 hour, the supernatant was collected, followed by measurement of concentration of the polymer 1 by LC, resulting in a polymer 1 concentration of 640 ppm by mass.

### Comparative Example 4

To 1 L of a solution containing 1,000 ppm by mass of perfluorooctanoic acid, was added 6 g of a 10% by mass aqueous solution of polyethyleneimine while stirred, and the mixture was stirred for 1 minute. A cloudy solution was obtained, and the solid and liquid therein were then separated using a centrifuge, followed by measurement of liquid portion by liquid chromatography (LC). As a result of measurement, the concentration of perfluorooctanoic acid was found to be 99 ppm by mass.

## Claims

1. A method for recovering a water-soluble fluorine-containing polymer, comprising mixing a composition containing the water-soluble fluorine-containing polymer having a number-average molecular weight of more than 0.1 x 10⁴ and water with a cationic polymer, to thereby recover the water-soluble fluorine-containing polymer from the composition.

2. The method for recovering according to claim 1, comprising mixing the composition with the cationic polymer, generating an agglomerate containing the water-soluble fluorine-containing polymer and the cationic polymer, and separating the water and the agglomerate, to thereby recover the water-soluble fluorine-containing polymer as the agglomerate.

3. The method for recovering according to claim 1 or 2, wherein the cationic polymer is at least one selected from the group consisting of a polyethyleneimine, a poly(diallyldimethylammonium) and a salt thereof, a poly(trimethylaminoethyl methacrylate) and a salt thereof, a poly(dimethylaminoethyl methacrylate), a dimethylamine-epichlorohydrin condensate, a dicyandiamide-formalin condensate, and a dicyandiamide-diethylenetriamine condensate.

4. The method for recovering according to any one of claims 1 to 3, wherein an amount of the cationic polymer is 1 to 10,000% by mass based on a mass of the water-soluble fluorine-containing polymer.

5. The method for recovering according to any one of claims 1 to 4, wherein a number-average molecular weight of the water-soluble fluorine-containing polymer is 0.3 x 10⁴ or more.

6. The method for recovering according to any one of claims 1 to 5, wherein the water-soluble fluorine-containing polymer has an ionic group.

7. The method for recovering according to any one of claims 1 to 6, wherein the water-soluble fluorine-containing polymer is a polymer (I) comprising a polymerized unit (I) based on a monomer (I) represented by the general formula (I):
CX¹X³=CX²R(-CG¹G²-A⁰)ₘ (I)
wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

8. The method for recovering according to claim 7, wherein a number-average molecular weight of the polymer (I) is 0.3 × 10⁴ or more.

9. The method for recovering according to claim 7 or 8, wherein an ion exchange rate of the polymer (I) is 53 or less.

10. The method for recovering according to any one of claims 1 to 9, wherein a content of the water-soluble fluorine-containing polymer in the composition is more than 0% by mass and 1% by mass or less, based on a mass of the composition.

11. The method for recovering according to any one of claims 1 to 10, wherein a recovery rate of the water-soluble fluorine-containing polymer is 99.0% by mass or more.

12. The method for recovering according to any one of claims 1 to 11, wherein the water-soluble fluorine-containing polymer is at least one selected from the group consisting of a polymer (1) comprising a polymerized unit (1) based on a monomer represented by the general formula (1) and a polymer (2) comprising a polymerized unit (2) based on a monomer represented by the general formula (2), a content of the polymerized unit (1) in the polymer (1) is 90 mol% or more based on all polymerized units of the polymer (1), and a content of the polymerized unit (2) in the polymer (2) is 90 mol% or more based on all polymerized units of the polymer (2),
the number-average molecular weight of the water-soluble fluorine-containing polymer is 0.3 × 10⁴ to 20.0 × 10⁴,
the content of the water-soluble fluorine-containing polymer in the composition is 0.020 to 0.2% by mass,
the cationic polymer is a polyethyleneimine, and
the amount of the cationic polymer is 30 to 500% by mass based on the mass of the water-soluble fluorine-containing polymer,
CX₂=CY(-CZ₂-O-Rf-A) (1)
wherein X is the same or different and is -H or F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, -OSO₃M or -C(CF₃)₂OM, wherein M is -H, a metal atom, -NR⁷₄, an imidazolium optionally having a substituent, a pyridinium optionally having a substituent or a phosphonium optionally having a substituent, and R⁷ is H or an organic group;
CX₂=CY(-O-Rf -A) (2)
wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is -COOM, -SO₃M, -OSO₃M or -C(CF₃)₂OM, wherein M is -H, a metal atom, -NR⁷₄, an imidazolium optionally having a substituent, a pyridinium optionally having a substituent or a phosphonium optionally having a substituent, and R⁷ is H or an organic group.

13. The method for recovering according to any one of claims 1 to 12, comprising
mixing the composition containing the water-soluble fluorine-containing polymer and water with an inorganic flocculant,
mixing a composition containing the water-soluble fluorine-containing polymer, water, and the inorganic flocculant with the cationic polymer,
mixing a composition containing the water-soluble fluorine-containing polymer, water, the inorganic flocculant, and the cationic polymer with at least one selected from the group consisting of an anionic polymer, a nonionic polymer, and an amphoteric polymer,
generating an agglomerate containing the water-soluble fluorine-containing polymer, the inorganic flocculant, the cationic polymer, and at least one selected from the group consisting of the anionic polymer, the nonionic polymer, and the amphoteric polymer, and
separating water and the agglomerate.
